# EUROPÄISCHE PATENTSCHRIFT

(11) **EP 2 384 955 B1**
(45) Veröffentlichungstag und Bekanntmachung des Hinweises auf die Patenterteilung: **29.04.2015**
(21) Anmeldenummer: 11003563.1
(22) Anmeldetag: 02.05.2011
(51) Int. Cl.: B62D 33/067, B62D 51/00, B62D 51/04

(54) **Deichselgeführtes Flurföderzeug**
Industrial truck guided by a tow bar
Chariot de manutention commandé par timon

(30) Priorität: 04.05.2010 DE 102010019278
(43) Veröffentlichungstag der Anmeldung: 09.11.2011
(73) Patentinhaber: OM Carrelli Elevatori S.p.A., 20020 Lainate (MI) (IT)
(72) Erfinder: Cuvilliez, Julien, 60170 Cambronne Les Ribecourt (FR); Ferreira, Paulo, 60940 Cinqueux (FR)
(74) Vertreter: Geirhos, Johann

(56) Entgegenhaltungen:
- EP-A1- 1 238 896
- EP-A1- 2 172 414
- DE-A1-102006 001 689
- FR-A1- 2 832 992
- US-A1- 2006 231 302
- US-A1- 2009 012 677
- US-A1- 2010 089 703

## Beschreibung

Die Erfindung betrifft ein deichselgeführtes Flurförderzeug, insbesondere Hubwagen, zum wahlweisen Betrieb im Mitgängerbetrieb und im Mitfahrerbetrieb, mit einem Fahrantrieb, insbesondere einem elektrischen Fahrantrieb, einer zwischen einer Stellung mit kurzer Deichsel und einer Stellung mit langer Deichsel längenverstellbaren Deichsel und einem Fahrerplatzmodul, das eine klappbare Fahrerstandplattform und klappbare Seitenbügel umfasst.

Deichselgeführte Flurförderzeuge sind als Hubwagen, insbesondere Niederhubwagen oder Hochhubwagen, und Kommissionierer bekannt. Mit der an dem Antriebsteil um eine vertikale Schwenkachse schwenkbaren Deichsel erfolgt die Bedienung des Flurförderzeugs, wobei durch Verschwenken der Deichsel um die vertikale Schwenkachse ein Antriebsrad des Flurförderzeugs gelenkt werden kann und mittels Bedienelementen, beispielsweise Drehschaltern oder Tastschaltern, an dem Deichselkopf ein Fahrantrieb und ein Hubantrieb des Flurförderzeugs gesteuert werden kann. An dem Deichselkopf sind in der Regel noch weitere Bedienelemente angeordnet, beispielsweise ein Sicherheitsschalter und ein Betätigungsschalter für eine als Hupe ausgebildete Signaleinrichtung.

Es ist bereits bekannt, bei derartigen Flurförderzeugen längenveränderbare Deichseln, beispielsweise klappbare oder knickbare Deichseln vorzusehen, um einen Betrieb des Flurförderzeugs mit kurzer Deichsel und einen Betrieb mit langer Deichsel zu ermöglichen. Bevorzugt werden derartige, auch als Kombi-Deichseln, bezeichnete Deichseln in gattungsgemäßen Flurförderzeugen eingesetzt, die sowohl im Mitgängerbetrieb als auch im Mitfahrerbetrieb betrieben werden können. Für den Mitfahrerbetrieb weist ein derartiges Flurförderzeug ein Fahrerplatzmodul mit einer klappbaren Fahrerstandplattform und klappbaren Seitenbügel auf, die in der ausgeklappten Stellung einer auf der ausgeklappten Fahrerstandplattform stehenden Bedienperson in seitlicher Richtung zusätzlichen Halt geben. Für den Mitgängerbetrieb ist die Fahrerstandplattform eingeklappt.

Aus der DE 10 2006 001 689 A1 ist ein Flurförderzeug zum wahlweisen Betrieb im Mitgängerbetrieb und im Mitfahrerbetrieb mit einer zwischen einer Stellung mit kurzer Deichsel und einer Stellung mit langer Deichsel längenverstellbaren Deichsel sowie einer klappbaren Fahrerstandplattform bekannt. Bei kurzer Deichselstellung wird die Höchstgeschwindigkeit im Mitgängerbetrieb reduziert und im Mitfahrerbetrieb angehoben.

Aus der US 2010/089703 A1 ist ein Flurförderzeug zum wahlweisen Betrieb im Mitgängerbetrieb und im Mitfahrerbetrieb bekannt, das eine Deichsel, eine klappbare Fahrerstandplattform und klappbaren Seitenbügel aufweist. Für den Mitfahrerbetrieb und den Mitgängerbetrieb sind unterschiedliche Höchstgeschwindigkeiten des Flurförderzeugs vorgesehen.

Die FR 2 832 992 A1 offenbart ein Fahrerplatzmodul für ein Flurförderzeug, das wahlweise im Mitgängerbetrieb und im Mitfahrerbetrieb betrieben werden kann. Das Fahrerplatzmodul umfasst eine klappbare Fahrerstandplattform, klappbare Seitenbügel und eine in der Länge nicht-veränderbare Deichsel.

Aus der EP 1 238 896 A1 ist ein Flurförderzeug mit einer zwischen einer Stellung mit kurzer Deichsel und einer Stellung mit langer Deichsel längenverstellbaren Deichsel und einer klappbaren Fahrerstandplattform bekannt.

Der vorliegenden Erfindung liegt die Aufgabe zugrunde, ein gattungsgemäßes Flurförderzeug zur Verfügung zu stellen, das in dem Mitgängerbetrieb und dem Mitfahrerbetrieb eine hohe Betriebssicherheit aufweist und auf eine hohe Umschlagleistung optimiert ist.

Diese Aufgabe wird erfindungsgemäß dadurch gelöst, dass im Mitgängerbetrieb bei hochgeschwenkter Fahrerstandplattform und eingeklappten Seitenbügeln die maximale Fahrgeschwindigkeit des Fahrantriebs des Flurförderzeugs in Abhängigkeit von der Stellung der Deichsel bei kurzer Deichsel oder bei langer Deichsel auf unterschiedliche Höchstwerte begrenzt ist und im Mitfahrerbetrieb bei ausgeklappter Fahrerstandplattform und in der kurzen Stellung befindlichen Deichsel die maximale Fahrgeschwindigkeit des Fahrantriebs des Flurförderzeugs in Abhängigkeit von der eingeklappten Stellung oder der ausgeklappten Stellung der Seitenbügel auf unterschiedliche Höchstwerte begrenzt ist. Im Mitgängerbetrieb und einem Betrieb mit kurzer Deichsel, beispielsweise beim Betrieb des Flurförderzeugs in engen Lagern bei beengten Platzverhältnissen oder beim Be- und Entladen von Lastkraftwagen, wobei die Bedienperson aufgrund der kurzen Deichsel einen geringen Abstand zum Flurförderzeug aufweist, wird die maximale Fahrgeschwindigkeit reduziert, um eine hohe Betriebssicherheit zu erzielen. Sofern im Mitgängerbetrieb die Deichsel in die lange Stellung gebracht wird und sich ein erhöhter Sicherheitsabstand für die Bedienperson ergibt, kann ein erhöhter Höchstwert für die Fahrgeschwindigkeit zugelassen werden. Im Mitgängerbetrieb wird daher lediglich in den Betriebszuständen mit kurzer Deichsel eine Reduzierung der maximalen Fahrgeschwindigkeit vorgenommen, so dass eine hohe Umschlagleistung im Mitgängerbetrieb bei einem entsprechenden Wechsel zwischen einem Betrieb mit langer Deichsel und kurzer Deichsel ermöglicht wird. Erfolgt im Mitfahrerbetrieb ein Betrieb mit ausgeklappter Fahrerstandplattform und eingeklappten Seitenbügeln wird die mögliche Höchstgeschwindigkeit reduziert. Werden im Mitfahrerbetrieb die Seitenbügel ausgeklappt und geben der auf der Fahrerstandplattform stehenden Bedienperson zusätzlichen seitlichen Halt, insbesondere bei einer Kurvenfahrt, kann die Fahrgeschwindigkeit auf einen erhöhten Höchstwert hochgesetzt werden, wodurch insbesondere bei längeren Fahrstrecken eine hohe Umschlagleistung erzielt wird. Damit wird einerseits in Abhängigkeit von der Stellung der Deichsel bzw. der Stellung der Seitenbügel eine hohe Betriebssicherheit für die Bedienperson erzielt und andererseits bei entsprechender Stellung der Deichsel bzw. der Seitenbügel durch eine Erhöhung der maximalen Fahrgeschwindigkeit eine hohe Umschlagleistung des Flurförderzeugs erzielt.

Im Mitgängerbetrieb bei einer kurzen Deichsel ist gemäß einer vorteilhaften Ausführungsform der Erfindung die maximale Fahrgeschwindigkeit des Fahrantriebs auf einen Höchstwert im Bereich von 4 km/h begrenzt. Durch eine derartige Verringerung der maximal möglichen Fahrgeschwindigkeit wird im Mitgängerbetrieb bei kurzer Deichsel und beengten Platzverhältnissen ein sicherer Betrieb des Flurförderzeugs erzielt, wobei weiterhin eine hohe Wendigkeit beim Ein- und Auslagern von Lasten erzielt wird.

Im Mitgängerbetrieb bei langer Deichsel ist gemäß einer vorteilhaften Ausführungsform der Erfindung die maximale Fahrgeschwindigkeit des Fahrantriebs auf einen Höchstwert im Bereich von 6 km/h begrenzt. Im normalen Mitgängerbetrieb bei langer Deichsel kann somit durch die Erhöhung der maximal mögliche Fahrgeschwindigkeit, die an eine normale Laufgeschwindigkeit der Bedienperson angepasst ist, eine hohe Umschlagleistung erzielt werden.

Im Mitfahrerbetrieb bei ausgeklappter Fahrerstandplattform und eingeklappten Seitenbügeln ist die maximale Fahrgeschwindigkeit des Fahrantriebs auf einen Höchstwert im Bereich von 6 km/h begrenzt. Mit einer derartigen Begrenzung der maximalen Fahrgeschwindigkeit im Mitfahrerbetrieb kann für die auf der ausgeklappten Fahrerstandplattform stehenden Bedienperson eine hohe Betriebssicherheit erzielt werden.

Im Mitfahrerbetrieb bei ausgeklappter Fahrerstandplattform und ausgeklappten Seitenbügeln ist die maximale Fahrgeschwindigkeit des Fahrantriebs auf einen Höchstwert im Bereich von 8 bis 12 km/h begrenzt. Die ausgeklappten Seitenbügel geben der auf der Fahrerstandplattform stehenden Bedienperson zusätzlichen seitlichen Halt, insbesondere während einer Kurvenfahrt. Dadurch kann im Mitfahrerbetrieb bei ausgeklappten Seitenbügeln die maximal mögliche Fahrgeschwindigkeit erhöht werden, so dass bei hoher Betriebssicherheit eine hohe Umschlagleistung des Flurförderzeugs ermöglicht wird.

Gemäß einer zweckmäßigen Ausgestaltungsform der Erfindung ist eine elektronische Steuereinrichtung vorgesehen, die den Fahrantrieb in Abhängigkeit von der Betätigung eines an der Deichsel angeordneten Fahrschalters ansteuert, wobei zur Erfassung der Stellung mit kurzer Deichsel und der Stellung mit langer Deichsel eine mit der elektronischen Steuereinrichtung in Verbindung stehende Sensoreinrichtung vorgesehen ist. Mit einer derartigen Sensoreinrichtung kann die lange bzw. kurze Stellung der Deichsel auf einfache Weise ermittelt werden, um die an dem Fahrschalter vorgegebene Fahrgeschwindigkeit in Abhängigkeit von der Stellung der Deichsel auf den entsprechenden Höchstwert zu begrenzen.

Sofern gemäß einer zweckmäßigen Ausgestaltungsform der Erfindung zur Erfassung der eingeklappten Stellung der Fahrerstandplattform und der ausgeklappten Stellung der Fahrerstandplattform eine mit der elektronischen Steuereinrichtung in Verbindung stehende Sensoreinrichtung vorgesehen ist, kann der Mitfahrerbetrieb bei ausgeklappter Fahrerstandplattform bzw. der Mitgängerbetrieb bei eingeklappter Fahrerstandplattform auf einfache Weise ermittelt werden, um die entsprechenden Höchstwerte der Fahrgeschwindigkeit durch die elektronische Steuereinrichtung einstellen und auswählen zu können.

Bevorzugt ist zur Erfassung der eingeklappten Stellung der Seitenbügel und der ausgeklappten Stellung der Seitenbügel eine mit der elektronischen Steuereinrichtung in Verbindung stehende Sensoreinrichtung vorgesehen. Mit einer derartigen Sensoreinrichtung kann auf einfache Weise der Höchstwert der Fahrgeschwindigkeit in Anhängigkeit von der Stellung der Seitenbügel von der elektronischen Steuereinrichtung ausgewählt werden, um bei ausgeklappten Seitenbügeln eine erhöhte maximale Fahrgeschwindigkeit oberhalb von 6 km/h für den Mitfahrerbetrieb zu ermöglichen.

Hinsichtlich der Optimierung der Umschlagleistung ist es günstig, wenn die Deichsel auf schnelle und einfache Weise und bei geringem Bedienungsaufwand zwischen der langen Stellung und der kurzen Stellung bzw. der kurzen Stellung und der langen Stellung von der Bedienperson verstellt werden kann. Bevorzugt weist die Deichsel einen Deichselfuß, einen Deichselschaft und einen Deichselkopf auf, wobei die Deichsel mittels des Deichselfußes an einem Antriebsteil des Flurförderzeugs um eine im Wesentlichen vertikale Schwenkachse schwenkbar gelagert ist, und die Deichsel zur Längenverstellung als klappbare Deichsel ausgebildet ist, wobei der Deichselschaft einen zweiteiligen Aufbau mit einem deichselfußnahen Teil und einem deichselkopfnahen Teil aufweist, wobei der deichselfußnahe Teil an dem Deichselfuß um eine im Wesentlichen horizontale Schwenkachse verschwenkbar gelagert ist und der deichselkopfnahe Teil über ein Schwenkgelenk mit einer im Wesentlichen horizontalen Schwenkachse an dem deichselfußnahen Bereich verschwenkbar gelagert ist, wobei in der Stellung mit kurzer Deichsel der deichselfußnahe Teil gegenüber dem deichselkopfnahen Teil angewinkelt ist und in der langen Stellung der deichselkopfnahe Teil in Verlängerung des deichselfußnahen Teils angeordnet ist. Mit einer derartigen klappbaren Deichsel, bei der sich in der kurzen Stellung der deichselfußnahe Teil und der deichselkopfnahe Teil angewinkelt zueinander befinden und in der langen Stellung die beiden Teile in einer gestreckten Position befinden, kann eine Deichsel zur Verfügung gestellt werden, die im Mitgängerbetrieb und im Mitfahrerbetrieb eine günstige Ergonomie aufweist und der Bedienperson sowohl im Mitgängerbetrieb als auch im Mitfahrerbetrieb eine optimale Position zum Flurförderzeug ermöglicht.

Gemäß einer bevorzugten Ausgestaltungsform der Deichsel ist der an dem deichselkopfnahen Teil angeordnete Deichselkopf in der Stellung mit kurzer Deichsel und in der Stellung mit langer Deichsel um das Schwenkgelenk zwischen dem deichselkopfnahen Teil und dem deichselfußnahen Teil zwischen einer waagerechten Position und einer senkrechten Position verschwenkbar. Der deichselkopfnahe Teil mit dem Deichselkopf ist somit sowohl in der Stellung mit kurzer Deichsel als auch in der Stellung mit langer Deichsel um die horizontale Schwenkachse an dem Schwenkgelenk zwischen dem deichselkopfnahen Teil und dem deichselfußnahen Teil verschwenkbar, so dass der Deichselkopf ein einheitliches Schwenkverhalten zwischen einer waagerechten Position und einer senkrechten Position in beiden Deichselstellungen aufweist. Dadurch wird die Ergonomie durch ein einheitliches Bedienverhalten weiter verbessert. Weiterhin ergeben sich hierdurch Vorteile hinsichtlich der Ergonomie und der Betriebssicherheit, insbesondere wenn die waagerechte bzw. abgesenkte Stellung des Deichselkopfes und/oder die senkrechte bzw. angehobene Stellung des Deichselkopfes als Bremsbereich ausgebildet ist, in dem eine Feststellbremseinrichtung des Flurförderzeugs betätigt wird oder die Fahrgeschwindigkeit bzw. die Beschleunigung des Fahrantriebs beeinflusst wird.

Besondere Vorteile sind erzielbar, wenn zwischen dem Deichselfuß und dem deichselfußnahen Teil des Deichselschaftes jeweils ein Anschlag für die kurze Stellung und die lange Stellung der Deichsel ausgebildet ist. Mit derartigen Anschlägen kann die Stellung des deichselfußnahen Teils der Deichsel sowohl in der kurzen Stellung der Deichsel mit eingeklapptem und somit an- bzw. abgewinkeltem deichselfußnahen Teil, und in der langen Stellung der Deichsel mit ausgeklapptem und somit gestrecktem deichselfußnahen Teil auf einfache Weise begrenzt werden.

Besondere Vorteile ergeben sich, wenn gemäß einer Weiterbildung der Erfindung eine Parallelführungseinrichtung für den Deichselkopf vorgesehen ist, die bei der Betätigung der Deichsel zwischen der langen Stellung und der kurzen Stellung eine Parallelführung des Deichselkopfes ermöglicht. Durch eine Parallelführung des Deichselkopfes wird erzielt, dass die Orientierung und die Winkellage des Deichselkopfs beim Verstellen zwischen der kurzen Stellung und langen Stellung der Deichsel, wobei der deichselfußnahe Teil der klappbaren Deichsel um die horizontalen Schwenkachse zwischen dem deichselfußnahen Teil und dem Deichselfuß verschwenkt, unverändert und konstant bleibt, so dass der Deichselkopf beim Verstellen der Deichsel lediglich eine Längenänderung mit einer kurzen, linearen Bewegungsbahn durchführt, jedoch keine Schwenkbewegungen des Deichselkopfes auftreten. Beim Verstellen der Deichsel zwischen der kurzen Stellung mit abgewinkeltem deichselfußnahen Teil und der langen Stellung mit gestrecktem deichselfußnahen Teil tritt somit keine Schwenkbewegung des Deichselkopfes auf, sondern eine Linearbewegung des Deichselkopfes mit einem kurzen Bewegungsweg, die der gewünschten Längenveränderung der Deichsel entspricht. Hierdurch wird ein schneller Wechsel der Deichsel zwischen den Stellungen langer Deichsel und kurzer Deichsel ermöglicht. Weiterhin ergibt sich hierdurch eine günstige Ergonomie, da die Bedienperson beim Betätigen der Deichsel zwischen der langen Stellung und der kurzen Stellung keine Veränderungen der Handposition durchführen muss, mit der die Bedienperson den Deichselkopf hält und bedient, so dass die erfindungsgemäße Deichsel bei gleichbleibender Handposition zwischen der langen Stellung und der kurzen Stellung bedienungsfreundlich verstellt werden kann. Zudem ist durch die Parallelführung des Deichselkopfes kein Durchlaufen der senkrechten Deichselstellung beim Wechsel zwischen der kurzen Stellung und der langen Stellung der Deichsel erforderlich, so dass die Deichsel zwischen einer langen und einer kurzen Stellung auf einfache und schnelle Weise, auch während des Fahrbetriebs des Flurförderzeugs verstellt werden kann. Durch die Parallelführung des Deichselkopfes kann zudem eine Verriegelungseinrichtung für den deichselkopfnahen Teil am Schwenkgelenk entfallen, so dass die Bedienungsfreundlichkeit weiter verbessert und ein schneller Wechsel zwischen der kurzen Stellung und langen Stellung der Deichsel durch eine verringerten Bedienungsaufwand erzielbar ist. Die Parallelführung des Deichselkopfes bei der Längenverstellung der Deichsel zwischen der langen und kurzen Stellung wirkt sich somit durch den erzielbaren schnellen und einfachen Wechsel der Deichsel ebenfalls günstig auf eine hohe erzielbare Umschlagleistung des Flurförderzeugs aus.

Eine Parallelführung des Deichselkopfes bei der Längenverstellung der Deichsel durch das Verschwenken des deichselfußnahen Teils und die Schwenkachse an dem Deichselfuß kann mit geringem Bauaufwand erzielt werden, wenn das Schwenkgelenk zwischen dem deichselfußnahen Teil und dem deichselkopfnahen Teil von einem Lagerbock gebildet ist, der über die Parallelführungseinrichtung mit dem Deichselfuß gekoppelt ist, und der deichselkopfnahe Teil an dem Lagerbock um die horizontale Schwenkachse zwischen der waagerechten Position und der senkrechten Position verschwenkbar gelagert ist. Mit derartigen Anschlägen an dem durch die Parallelführungseinrichtung zwangsgeführten Lagerbock kann auf einfache Weise der mit dem Deichselkopf versehene deichselkopfnahe Teil der klappbaren bzw. knickbaren Deichsel sowohl in der kurzen Stellung der Deichsel als auch in der langen Stellung der Deichsel zwischen der abgesenkten, im Wesentlichen waagerechten Stellung des Deichselkopfes, und der angehobenen, im Wesentlichen senkrechten Stellung des Deichselkopfes um die horizontale Schwenkachse verschwenkt werden.

Die Parallelführungseinrichtung kann von entsprechenden Parallelogrammhebeln gebildet werden, die jeweils mit einem Ende an dem Deichselfuß und mit dem anderen Ende an dem Lagerbock für den deichselkopfnahen Bereich angeordnet sind. Gemäß einer vorteilhaften Ausführungsform der Erfindung ist die Parallelführungseinrichtung von einem Zugmitteltrieb, insbesondere einem als Kettentrieb ausgebildeten formschlüssigen Zugmitteltrieb, gebildet. Mit einem Zugmitteltrieb kann ein einfacher und platzsparender Aufbau und ein geringer Herstellaufwand für die Parallelführungseinrichtung erzielt werden. Der Zugmitteltrieb kann von einem kraftschlüssigen Zugmitteltrieb gebildet werden, beispielsweise einem Riementrieb mit einem Flachriemen oder Keilriemen als Zugmittel, das über entsprechende Riemenscheiben an dem Lagerbock und dem Deichselfuß geführt ist. Mit einer Spannrolle für das Zugmittel kann hierbei ein Durchrutschen verhindert werden, um die Parallelführung und Zwangsführung des Lagerbocks sicherzustellen. Sofern der Zugmitteltrieb als formschlüssiger Zugmitteltrieb ausgebildet ist, kann die Parallelführung und Zwangsführung des Lagerbocks mit verringertem Bauaufwand erzielt werden. Ein formschlüssiger Zugmitteltrieb kann beispielsweise von einem Zahnriementrieb mit einem Zahnriemen und entsprechend profilierten Zahnrädern an dem Deichselfuß sowie dem Lagerbock gebildet werden. Gemäß einer bevorzugten Ausgestaltungsform der Erfindung ist der Zugmitteltrieb als Kettentrieb ausgebildet mit einem an dem Deichselfuß angeordneten Kettenrad und einem an dem Lagerbock angeordneten Kettenrad sowie einer die beiden Kettenräder umschlingenden Kette. Ein derartiger Kettentrieb weist einen einfachen Aufbau mit geringen Herstellkosten auf und benötigt einen geringen Bauraumbedarf an der klappbaren Deichsel.

Gemäß einer zweckmäßigen Weiterbildung der Erfindung ist eine formschlüssige Arretierungsvorrichtung zur Arretierung der Deichsel in der kurzen Stellung vorgesehen. Mit einer derartigen formschlüssigen Verriegelungseinrichtung kann bevorzugt die Deichsel in der kurzen Stellung arretiert und verriegelt werden. Im Mitfahrerbetrieb bei einer auf der ausgeklappten Fahrerstandplattform stehenden Bedienperson befindet sich die Deichsel in der kurzen Stellung. Da das Flurförderzeug im Mitfahrerbetrieb gegenüber dem Mitgängerbetrieb, bei dem der Höchstwert der Fahrgeschwindigkeit auf 4 bis 6 km/h begrenzt ist, mit einem erhöhten Höchstwert der Fahrgeschwindigkeit im Bereich von 8 bis 12 km/h betrieben werden kann, kann durch eine Verriegelung der Deichsel in der kurzen Stellung eine hohe Betriebssicherheit erzielt werden. Da bei der erfindungsgemäßen Deichsel aufgrund der Parallelführung und Zwangsführung des Lagerbocks keine weitere Verriegelungseinrichtung für das Schwenkgelenk zwischen dem deichselkopfnahen Teil und dem deichselfußnahen Teil erforderlich ist, ergibt sich eine hohe Bedienungsfreundlichkeit und ist ein schneller Wechsel der Deichsel zwischen der kurzen und der langen Stellung erzielbar, da beim Wechsel von der kurzen Stellung in die lange Stellung der Deichsel lediglich die formschlüssige Verriegelungseinrichtung zu lösen ist.

Die formschlüssige Arretierungsvorrichtung umfasst gemäß einer bevorzugten Ausführungsform der Erfindung einen an dem deichselfußnahen Teil angeordneten Rasthaken, der mit einer Rastausnehmung in dem Deichselfuß zusammenwirkt. Mit einem derartigen Rasthaken kann insbesondere die Deichsel in der kurzen Stellung bei eingeklapptem deichselfußnahen Teil auf einfache Weise an dem Deichselfuß formschlüssig verriegelt werden.

Besondere Vorteile ergeben sich, wenn der Rasthaken federbeaufschlagt ist und mittels eines an dem deichselfußnahen Teil angeordneten Handhebels betätigbar ist. Durch eine Feder kann der Rasthaken auf einfache Weise in eine Verriegelungsstellung zur Verriegelung des deichselfußnahen Teils, bevorzugt in der kurzen Stellung der Deichsel, an dem Deichselfuß beaufschlagt werden. Zum Verstellen der Deichsel ausgehend von der kurzen Stellung in die lange Stellung ist somit von der Bedienperson lediglich der Handhebel zu betätigen, um den Rasthaken in die Lösestellung zu betätigen. Sofern an dem Deichselfuß angrenzend an die Rastausnehmung eine Führungskulisse für den Rasthaken ausgebildet ist, an der der Rasthaken beim Verstellen der Deichsel von der langen Stellung in die kurze Stellung geführt ist, kann erzielt werden, dass der federbeaufschlagte Rasthaken ohne zusätzlichen Bedienungsaufwand beim Verstellen der Deichsel von der langen Stellung in die kurze Stellung in die Rastausnehmung geführt und automatisch bei Erreichen der kurzen Stellung durch die Feder in der Verriegelungsstellung verriegelt wird, so dass beim Verstellen der Deichsel von der langen Stellung in die kurze Stellung kein zusätzliches Betätigen der Arretierungsvorrichtung durch die Bedienperson erforderlich ist.

Bevorzugt ist an dem Lagerbock eine Sensoreinrichtung, insbesondere ein Tastschalter, zur Erfassung der angehobenen Stellung und/oder der abgesenkten Stellung des Deichselkopfes angeordnet. Da der Deichselkopf sowohl in der kurzen Stellung als auch in der langen Stellung um die an dem Lagerbock angeordnete Schwenkachse verschwenkt, kann mit einer derartigen Sensoreinrichtung auf einfache Weise in beiden Deichselstellungen die waagerechte, abgesenkte Position des Deichselkopfes und/oder die senkrechte, angehobene Position des Deichselkopfes erfasst werden, um entsprechende Bremsbereiche bei senkrechter und/oder waagerechter Deichselkopfstellung zu ermitteln, in denen eine automatische Aktivierung einer Bremseinrichtung, beispielsweise einer Feststellbremse, oder eine Reduzierung der Fahrgeschwindigkeit bzw. der Beschleunigung des Fahrantriebs des Flurförderzeugs erfolgt.

Sofern gemäß einer Weiterbildung der Erfindung die Sensoreinrichtung zur Erfassung der Stellung mit kurzer Deichsel und der Stellung mit langer Deichsel von einer im Bereich des Deichselfußes angeordneten Sensoreinrichtung, insbesondere einem Tastschalter, gebildet ist, die mittels des deichselfußnahen Teils betätigt ist, kann auf einfache Weise bei der klappbaren Deichsel mit dem zweigeteilten Deichselschaft die Deichselstellung mit langer und kurzer Stellung ermittelt werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßen Flurförderzeug in einer perspektivischen Darstellung,
- Figur 2: eine Deichsel des erfindungsgemäßen Flurförderzeugs in einer Seitenansicht in der Stellung kurze Deichsel,
- Figur 3: die Deichsel in einer Seitenansicht in der Stellung lange Deichsel,
- Figur 4: eine perspektivische Ansicht der Deichsel in der Stellung kurze Deichsel und abgesenkter Stellung des Deichselkopfes,
- Figur 5: eine perspektivische Ansicht der Deichsel in der Stellung kurze Deichsel und angehobener Stellung des Deichselkopfes,
- Figur 6: einen Ausschnitt der Figur 5 in einer vergrößerten Darstellung,
- Figur 7: eine Seitenansicht der Deichsel in der Stellung kurze Deichsel und abgesenkter Stellung des Deichselkopfes,
- Figur 8: eine Seitenansicht der Deichsel in der Stellung kurze Deichsel und angehobener Stellung des Deichselkopfes,
- Figur 9: die Deichsel gemäß der Figur 8 bei betätigter Arretierungsvorrichtung,
- Figur 10: eine perspektivische Ansicht der Deichsel in der Stellung lange Deichsel und abgesenkter Stellung des Deichselkopfes,
- Figur 11: die Deichsel in der Stellung gemäß der Figur 10 in einer vergrößerten Darstellung,
- Figur 12: eine perspektivische Ansicht der Deichsel in der Stellung lange Deichsel und angehobener Stellung des Deichselkopfes,
- Figur 13: die Deichsel der Figur 12 in einer anderen Ansicht,
- Figur 14: die Deichsel der Figuren 12 und 13 in einer weiteren Ansicht,
- Figur 15a und 15b: das erfindungsgemäße Flurförderzeug im Mitgängerbetrieb mit kurzer und langer Deichsel und
- Figur 16a und 16b: das erfindungsgemäße Flurförderzeug im Mitfahrerbetrieb mit eingeklappten und ausgeklappten Seitenbügeln.

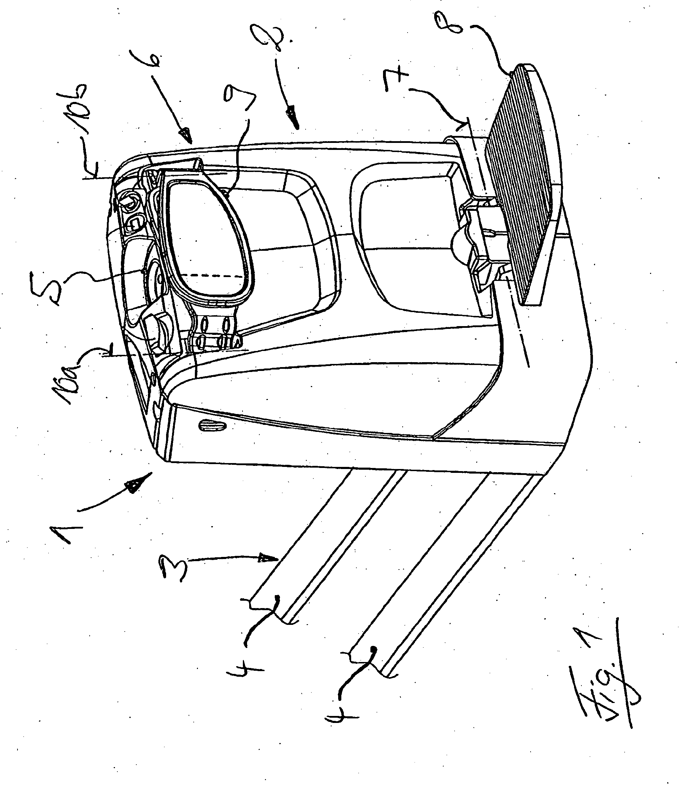

In der Figur 1 ist ein erfindungsgemäßes deichselgeführtes, als Lagertechnikstapler ausgebildetes Flurförderzeug 1 dargestellt, das beispielsweise als Hubwagen, insbesondere Niederhubwagen, ausgebildet ist. Das Flurförderzeug 1 weist einen Antriebsteil 2 und einen relativ zu dem Antriebsteil 2 anhebbaren und absenkbaren Lastteil 3 auf. Der Lastteil 3 umfasst eine von beispielsweise zwei seitlich beabstandeten Lastarmen 4 gebildete Lastgabel.

Mittels an den Spitzen der Lastarme 4 angeordneter und nicht mehr dargestellter Lastrollen ist der Lastteil 3 auf einer Fahrbahn abgestützt.

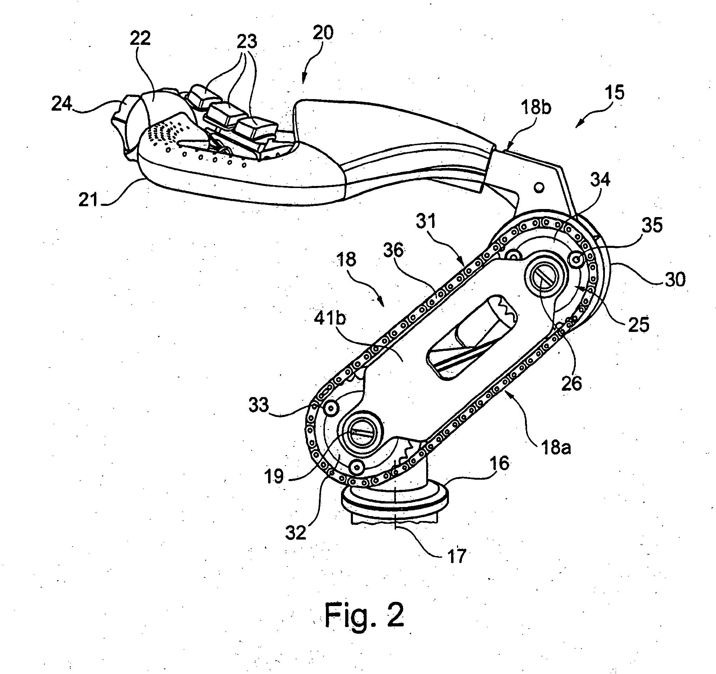

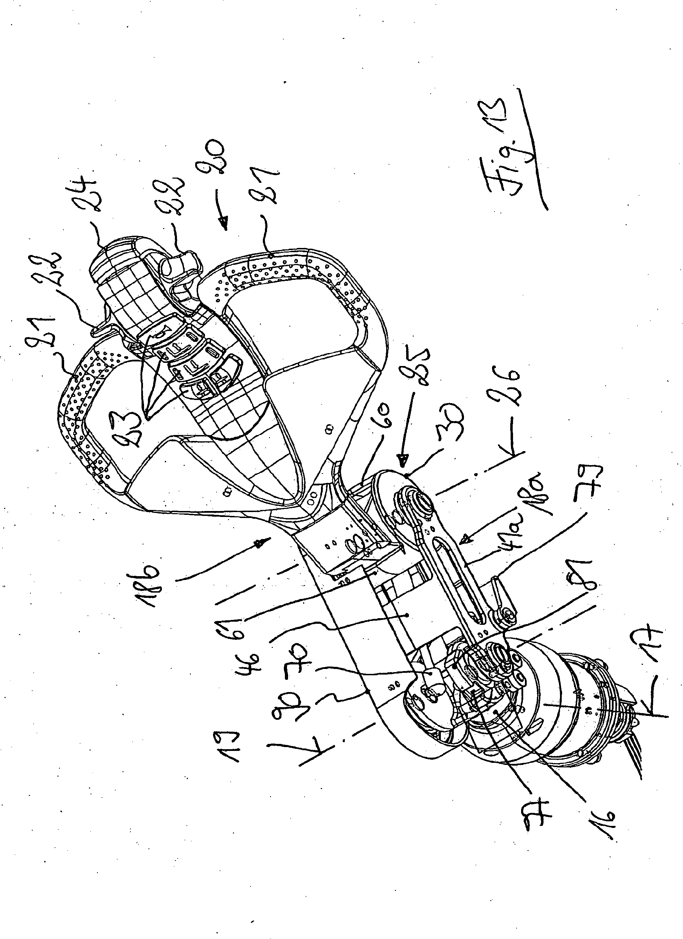

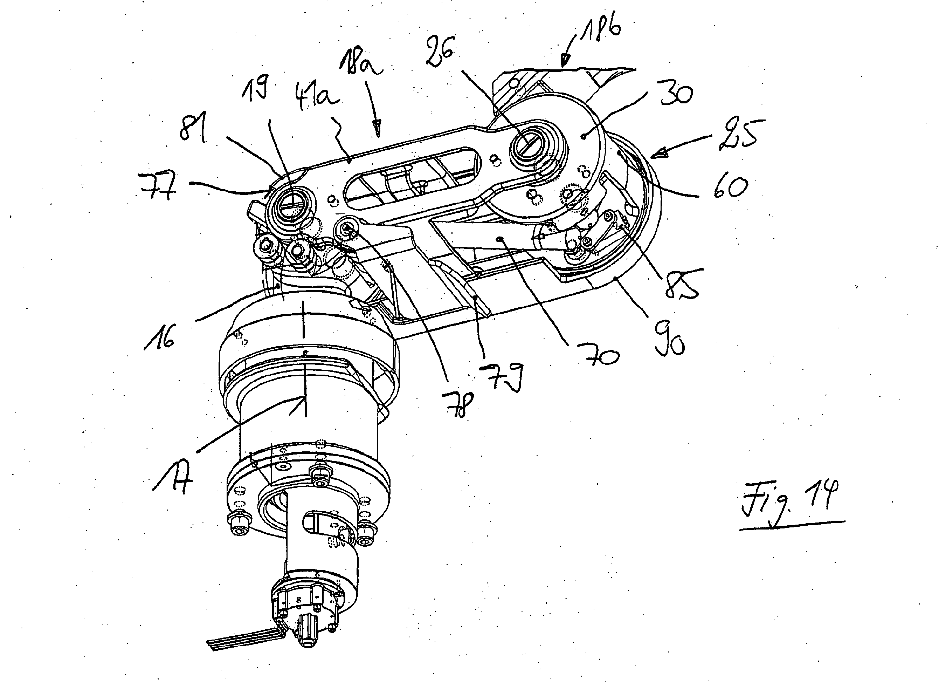

In dem Antriebsteil 2 ist ein nicht näher dargestellter Fahrantrieb, der ein Antriebsrad und einen das Antriebsrad antreibenden elektrischen Fahrantriebsmotor umfasst, um eine vertikale Schwenkachse lenkbar angeordnet ist. Das Lenken und die Bedienung des Flurförderzeugs 1 durch eine Bedienperson erfolgt mittels einer in der Figur 1 nicht näher dargestellten Deichsel, die an der Oberseite des Antriebsteils 2 bevorzugt in dessen mittleren Bereich angeordnet ist. In der Figur 1 ist eine Ausnehmung 5 dargestellt, in der die in den Figuren 2 bis 14 näher dargestellte Deichsel angeordnet ist. Das Lenken des Antriebsrades kann hierbei durch eine mechanische Verbindung der Deichsel mit dem Antriebsrad erfolgen. Zudem kann für das Antriebsrad ein elektrischer Lenkantrieb vorgesehen sein, bei dem ein Sensor an der Deichsel den Lenkwinkel erfasst und ein Lenkmotor in Abhängigkeit von dem Lenkwinkel betätigt wird.

Das erfindungsgemäße Flurförderzeug 1 ist zum wahlweisen Betrieb im Mitgängerbetrieb und im Mitfahrerbetrieb vorgesehen. Hierzu ist an dem Antriebsteil 2 gegenüberliegend zu dem Lastteil 3 ein Fahrerplatzmodul 6 angeordnet, das eine um eine horizontale Schwenkachse 7 klappbar am Antriebsteil 2 angeordnete Fahrerstandplattform 8 und zwei der Fahrerstandplattform 8 zugeordnete, schwenkbare Seitenbügel 9 umfasst, die um jeweils eine beispielsweise vertikale Schwenkachse 10a, 10b an den seitlichen Bereichen des Antriebsteil 2 zwischen einer eingeklappten und ausgeklappten Stellung schwenkbar und somit klappbar angeordnet sind. Die Seitenbügel 9 können alternativ um eine horizontale Schwenkachse zwischen einer eingeklappten und ausgeklappten Stellung verschwenkbar und somit klappbar sein.

In der Vorderseite des Antriebsteils 2 sind für die eingeklappte Fahrerstandplattform 8 und die eingeklappten Seitenbügel 9 jeweils eine Ausbuchtung vorhanden, so dass im Mitgängerbetrieb bei eingeklappter Fahrerstandplattform 8 und eingeklappten Seitenbügeln 9 die Fahrerstandplattform 8 und die Seitenbügel 9 innerhalb der Kontur des Antriebsteils 2 angeordnet sind.

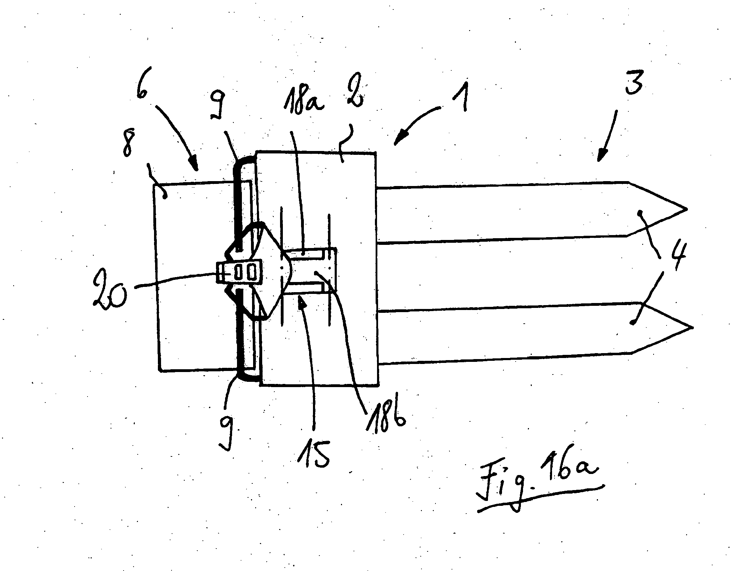

In der Figur 1 ist das Flurförderzeug 1 im Mitfahrerbetrieb mit ausgeklappter Fahrerstandplattform 8 und eingeklappten Seitenbügeln 9 dargestellt. In der Figur 16a ist ebenfalls das Flurförderzeug 1 im Mitfahrerbetrieb mit ausgeklappter Fahrerstandplattform 8 und eingeklappten Seitenbügeln 9 dargestellt, wobei sich weiterhin eine später beschriebene klappbare Deichsel 15 in einer kurzen Stellung befindet.

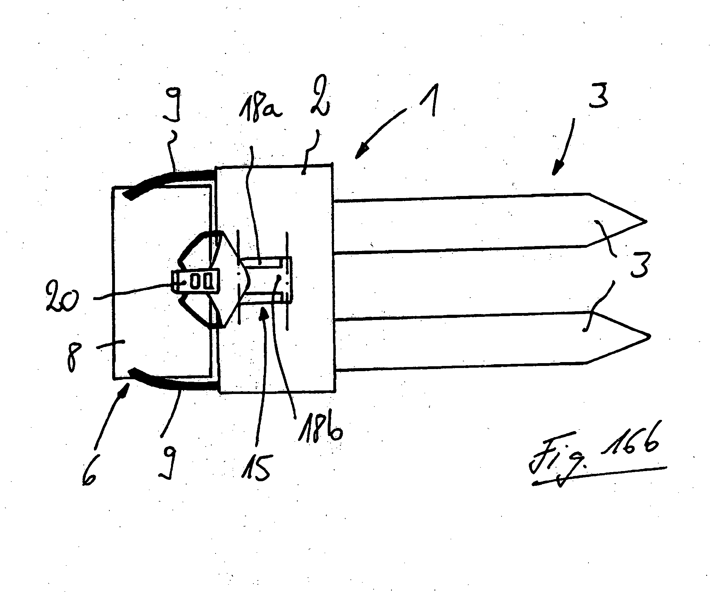

Durch Verschwenken der Seitenbügel 9 um die entsprechende Schwenkachse 10a, 10b nach Außen kann das Flurförderzeug 1 ausgehend von der Figur 16a in eine Stellung für den Mitfahrerbetrieb gemäß der Figur 16b gebracht werden, in der die in der ausgeklappten Stellung befindlichen beiden Seitenbügel 9 einer auf der Fahrerstandplattform 8 stehenden Bedienperson zusätzlich seitlichen Halt bieten. Im Mitfahrerbetrieb gemäß den Figuren 16a und 16b erfolgt die Bedienung des Flurförderzeugs mit kurzer Deichsel 15.

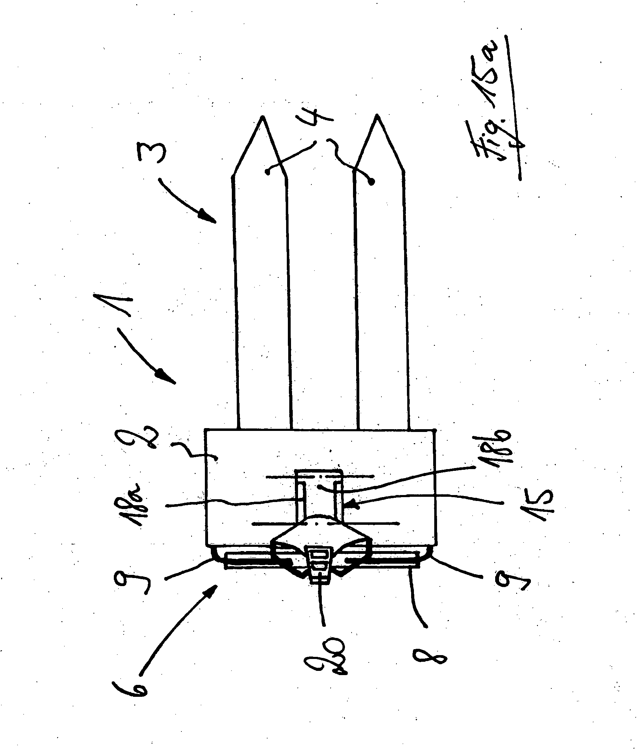

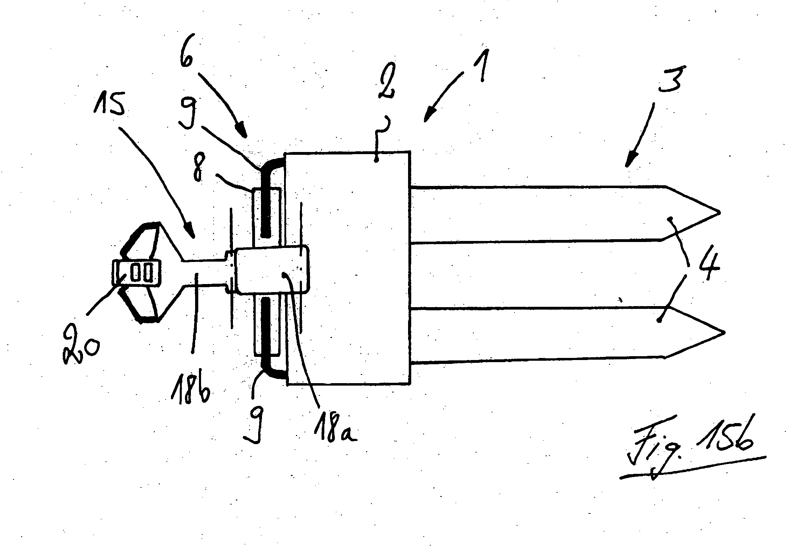

Bei eingeklappten Seitenbügeln 9 und durch Hochschwenken der Fahrerstandplattform 8 um die Schwenkachse 7 in eine eingeklappte Stellung kann das Flurförderzeug 1 im Mitgängerbetrieb betrieben werden. In den Figuren 15a und 15b ist das Flurförderzeug im Mitgängerbetrieb dargestellt, wobei gemäß der Figur 15a ein Mitgängerbetrieb mit kurzer Deichsel 15 und gemäß Figur 15b ein Mitgängerbetriebe mit langer Deichsel 15 ermöglicht ist.

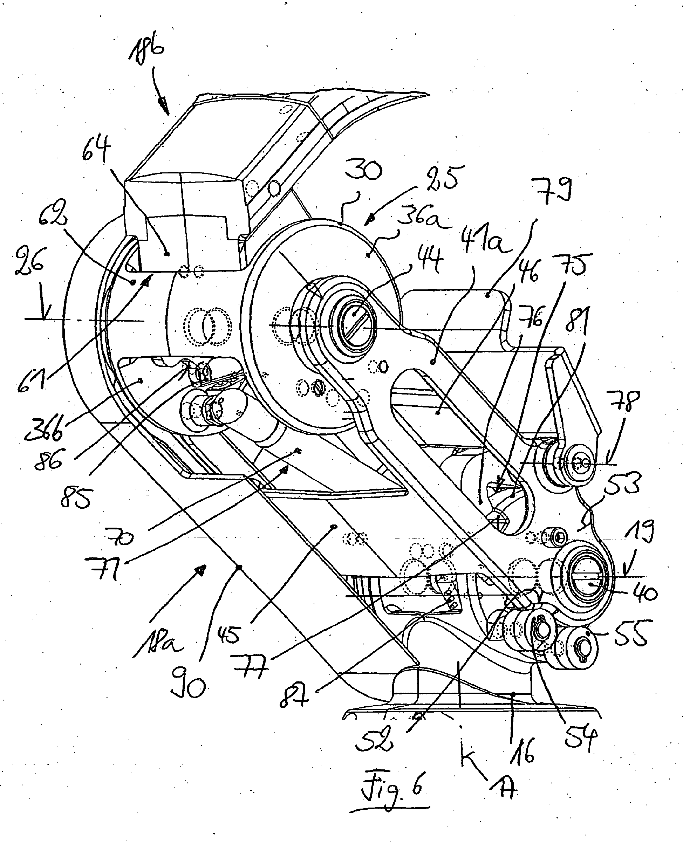

Zur Steuerung des Fahrantriebs, der einen als Elektromotor ausgebildeten Fahrmotor umfasst, ist eine nicht näher dargestellte elektronische Steuereinrichtung vorgesehen, die eingangsseitig mit später beschriebenen Fahrschaltern 22 an der Deichsel 15, einer Sensoreinrichtung 87 zur Erfassung der Stellung mit kurzer Deichsel und der Stellung mit langer Deichsel, die anhand der Figur 6 noch näher beschrieben wird, einer nicht näher dargestellten Sensoreinrichtung zur Erfassung der eingeklappten Stellung der Fahrerstandplattform 8 und der ausgeklappten Stellung der Fahrerstandplattform 8 und einer nicht näher dargestellten Sensoreinrichtung zur Erfassung der eingeklappten Stellung der Seitenbügel 9 und der ausgeklappten Stellung der Seitenbügel 9. Die Sensoreinrichtungen sind bevorzugt von Tastschaltern, insbesondere Mikroschaltern gebildet. Mittels der elektronischen Steuereinrichtung wird hierbei im Mitgängerbetrieb die maximal zulässige Fahrgeschwindigkeit in Abhängigkeit von den Stellungen der klappbaren Deichsel 15 auf unterschiedliche Höchstgeschwindigkeiten begrenzt. Im Mitgängerbetrieb gemäß der Figur 15a mit kurzer Deichsel 15 erfolgt eine Reduzierung der maximalen Fahrgeschwindigkeit für die Vorwärtsfahrt bzw. Rückwärtsfahrt auf einen Wert im Bereich von 4 km/h. Im Mitgängerbetrieb gemäß der Figur 15b mit langer Deichsel 15 ist ein normaler Betrieb des Flurförderzeugs 1 mit einer maximal möglichen Fahrgeschwindigkeit für die Vorwärtsfahrt bzw. Rückwärtsfahrt im Bereich von 6 km/h ermöglicht. Eine maximal mögliche Fahrgeschwindigkeit für die Vorwärtsfahrt bzw. Rückwärtsfahrt im Bereich von 6 km/h wird ebenfalls im Mitfahrerbetrieb gemäß der Figur 16a mit eingeklappten Seitenbügeln 9 ermöglicht. Im Mitfahrerbetrieb gemäß der Figur 16b mit ausgeklappten Seitenbügeln 9 wird die maximal mögliche Fahrgeschwindigkeit für die Vorwärtsfahrt bzw. Rückwärtsfahrt auf eine Wert im Bereich von 8 bis 12 km/h, bevorzugt 9 km/h, angehoben.

Hinsichtlich einer Optimierung der Umschlagsleistung des Flurförderzeugs 1 ist insbesondere im Mitgängerbetrieb ein schneller und bedienungsfreundlicher Wechsel der Deichsel 15 zwischen den Stellungen kurze Deichsel und lange Deichsel erforderlich. In den Figuren 2 bis 14 ist eine klappbare Deichsel 15 für das erfindungsgemäße Flurförderzeug näher dargestellt, die in der Ausnehmung 5 an der Oberseite des Antriebsteils 2 an dem antriebsteilseitigen Ende des Flurförderzeugs 1 angeordnet ist.

Die Deichsel 15 weist einen Deichselfuß 16 auf, der an dem Antriebsteil 2 um eine vertikale Schwenkachse 17 schwenkbar angeordnet ist. An dem Deichselfuß 16 ist ein Deichselschaft 18 der Deichsel 15 mit einem deichselfußnahen Bereich um eine im Wesentlichen horizontale Schwenkachse 19 schwenkbar gelagert. An einem deichselkopfseitigen Bereich des Deichselschaftes 18 ist ein Deichselkopf 20 angeordnet, der mit Handgriffen 21 und Bedienelementen versehen ist, beispielsweise als Flügelschaltern ausgebildeten Fahrschaltern 22 im Bereich der Handgriffe 21 zur Steuerung der Fahrtrichtung und der Fahrgeschwindigkeit des Fahrantriebs, als Tastschalter an der Oberseite des Deichselkopfes 20 angeordneten Schaltern 23 zur Steuerung des Hubantriebs zum Heben/Senken des Lastteils 3 und zur Steuerung einer von einer Hupe gebildete Signaleinrichtung sowie einem als Druckschalter ausgebildeter Sicherheitsschalter 24 an der der Bedienperson zugewandten Stirnseite des Deichselkopfes 20.

Die Deichsel 15 ist zur Längenverstellung als klappbare Deichsel mit einem zweiteiligen Deichselschaft 18 ausgebildet, wobei der Deichselschaft 18 einen deichselfußnahen Teil 18a und einen deichselkopfnahen Teil 18b umfasst. Mit dem deichselfußnahen Teil 18a ist der Deichselschaft 18 an dem Deichselfuß 16 um die horizontale Schwenkachse 19 schwenkbar gelagert. Der deichselkopfnahe Teil 18b ist mit dem Deichselkopf 20 versehen. Zwischen dem deichselfußnahen Teil 18a und dem deichselkopfnahen Teil 18b ist ein die Funktion eines Kniegelenks des Deichselschaftes 18 aufweisendes Schwenkgelenk 25 mit einer im Wesentlichen horizontalen Schwenkachse 26 ausgebildet, mit dem der deichselkopfnahe Teil 18b an dem deichselfußnahen Teil 18a verschwenkbar gelagert ist.

In der Figur 2 befindet sich die Deichsel 15 in einer eingeklappten und abgewinkelten Stellung und somit der Stellung kurze Deichsel für den Mitfahrerbetrieb des Flurförderzeugs 1 gemäß den Figuren 16a, 16b bzw. für den Mitgängerbetrieb gemäß der Figur 15a. Der deichselfußnahe Teil 18a des Deichselschaftes 18 ist hierbei um die Schwenkachse 19 in Richtung zu dem Lastteil 3 abgewinkelt und befindet sich oberhalb des Antriebsteils 2 in einer von der Bedienperson weggeneigten Stellung. Der deichselkopfnahe Teil 18b des Deichselschaftes 18 ist um die Schwenkachse 26 gegenüber dem deichselfußnahen Teil 18a abgewinkelt und erstreckt sich in Richtung des antriebsteilseitigen Endes des Flurförderzeugs 1 in Richtung zu der Bedienperson. In der kurzen Stellung der Deichsel 15 sind somit der deichselkopfnahe Teil 18b angewinkelt zu dem deichselfußnahen Teil 18a angeordnet.

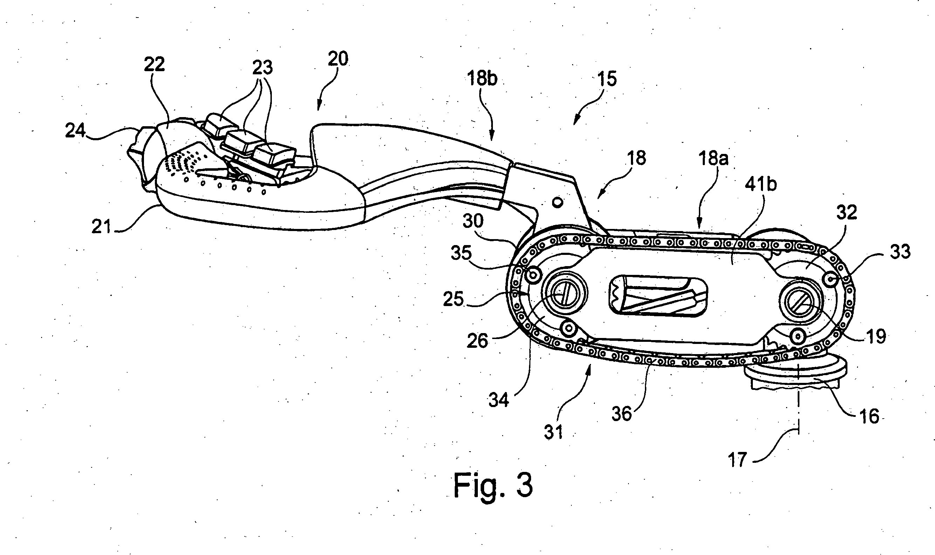

Die Figur 3 zeigt die erfindungsgemäße Deichsel 15 in einer ausgeklappten und gestreckten Stellung und somit der Stellung lange Deichsel für den Mitgängerbetrieb des Flurförderzeugs 1 gemäß der Figur 15b. Der deichselfußnahe Teil 18a ist um die Schwenkachse 19 in Richtung des antriebsteilseitigen Endes des Flurförderzeugs 1 verschwenkt und erstreckt sich in Richtung zu der Bedienperson. In der langen Stellung der Deichsel 15 befindet sich somit der deichselkopfnahe Teil 18b in Verlängerung des deichselfußnahen Teils 18a und erstreckt sich zur Bedienperson.

Bei der Deichsel 15 ist das Schwenkgelenk 25 zwischen dem deichselfußnahen Teil 18a und dem deichselkopfnahen Teil 18b von einem um die Schwenkachse 26 verschwenkbaren Lagerbock 30 gebildet, der über eine Parallelführungseinrichtung 31 mit dem Deichselfuß 16 gekoppelt ist. Der deichselkopfnahe Teil 18b mit dem Deichselkopf 20 ist an dem Lagerbock 30 um die Schwenkachse 26 verschwenkbar gelagert.

In den Figuren 2 und 3 ist der Aufbau der Parallelführungseinrichtung 31 näher dargestellt. Die Parallelführungseinrichtung 31 ist im dargestellten Ausführungsbeispiel von einem bevorzugt formschlüssigen Zugmitteltrieb gebildet, der als Kettentrieb ausgestaltet ist. Der Kettentrieb umfasst ein um die Schwenkachse 19 drehfest an dem Deichselfuß 16 angeordnetes Kettenrad 32. Zur Befestigung des Kettenrades 32 an dem Deichselfuß 16 sind beispielsweise Schraubverbindungen 33 als Befestigungsmittel vorgesehen. Ein weiteres Kettenrad 34 ist an dem um die Schwenkachse 26 verschwenkbaren Lagerbock 30 drehfest befestigt. Hierzu sind beispielsweise Schraubverbindungen 35 als Befestigungsmittel vorgesehen. Ein als Kette 36 ausgebildetes Zugmittel ist auf die beiden Kettenräder 32, 34 aufgelegt und umschlingt die beiden Kettenräder 32, 34.

Mit der Parallelführungseinrichtung 31 ist hierbei beim Verstellen der Deichsel 15 zwischen der kurzen Stellung und der langen Stellung und somit beim Ein- bzw. Ausklappen des deichselfußnahen Teils 18a um die Schwenkachse 19 zur Längenverstellung der Deichsel 15 ein derartiges Verschwenken des an dem deichselfußnahen Teils 18a um die Schwenkachse 26 schwenkbar gelagerten Lagerbocks 30 erzielbar, dass eine Parallelführung des Lagerbocks 30 und somit des in dem Lagerbock 30 angeordneten deichselkopfnahen Teils 18b mit dem Deichselkopf 20 erzielt wird. Der Deichselkopf 20 durchläuft hierdurch eine kurze und im Wesentlichen lineare Bewegungsbahn und die Bedienperson, die mit einer Hand oder beiden Händen den Deichselkopf 20 an den Griffabschnitten 21 hält, kann die Deichsel 15 von der kurzen Stellung in die lange Stellung und entsprechend von der langen Stellung in die kurze Stellung bei unveränderter Griffposition verstellen, ohne die Handposition an den Griffabschnitten 21 des Deichselkopfes 20 verändern zu müssen.

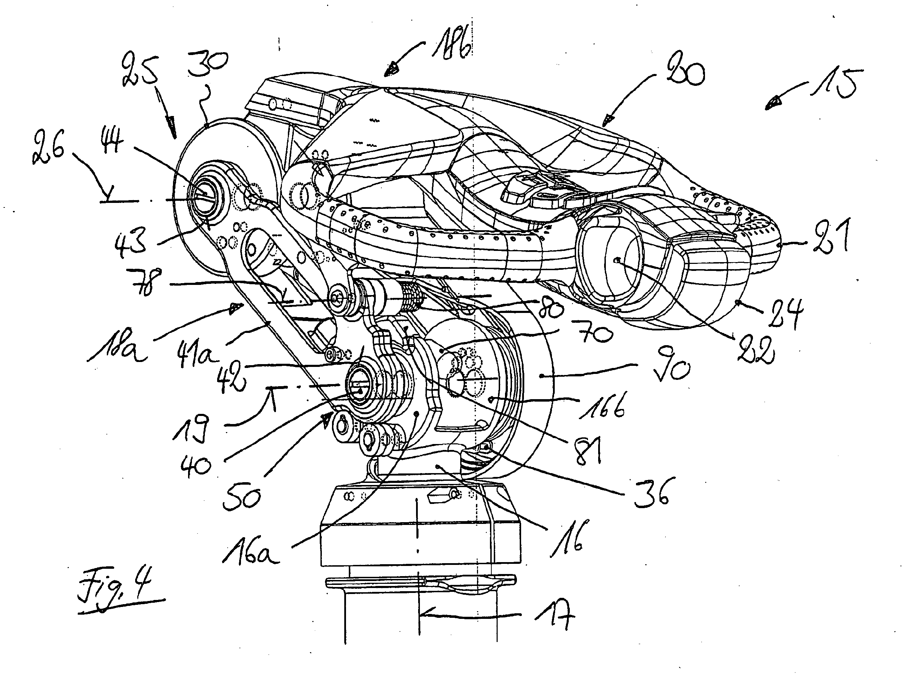

Der Deichselfuß 16 ist - wie insbesondere den Figuren 4 bis 6 und 10 bis 13 näher zu entnehmen ist - als Lagergabel ausgebildet und weist zwei seitliche, senkrechte Flanschplatten 16a, 16b auf, die an den Außenseiten mit jeweils einem Lagerzapfen 40 versehen sind, die die Schwenkachse 19 bilden.

Der deichselfußnahe Teil 18a des Deichselschaftes 18 weist zwei seitlich beabstandete Flanschplatten 41a, 41b auf, die an einem unteren Endbereich mit jeweils einer Lagerbohrungen 42 versehen sind, mit der die Flanschplatte 41a, 41 b an dem entsprechenden Lagerzapfen 40 des Deichselfußes 16 verschwenkbar gelagert ist.

Die Flanschplatten 41 a, 41 b weisen an dem gegenüberliegenden oberen Ende jeweils eine Lagerbohrung 43 auf, in der ein Lagerbolzen 44 verschwenkbar gelagert ist, der die Schwenkachse 26 des Schwenkgelenks 25 bildet. Der Lagerbolzen 44 ist bevorzugt mit dem deichselkopfnahen Teil 18b drehfest verbunden. Auf dem Lagerbolzen 44 ist zudem der zwischen den beiden Flanschplatten 41a, 41b angeordnete Lagerbock 30 um die Schwenkachse 26 verschwenkbar angeordnet.

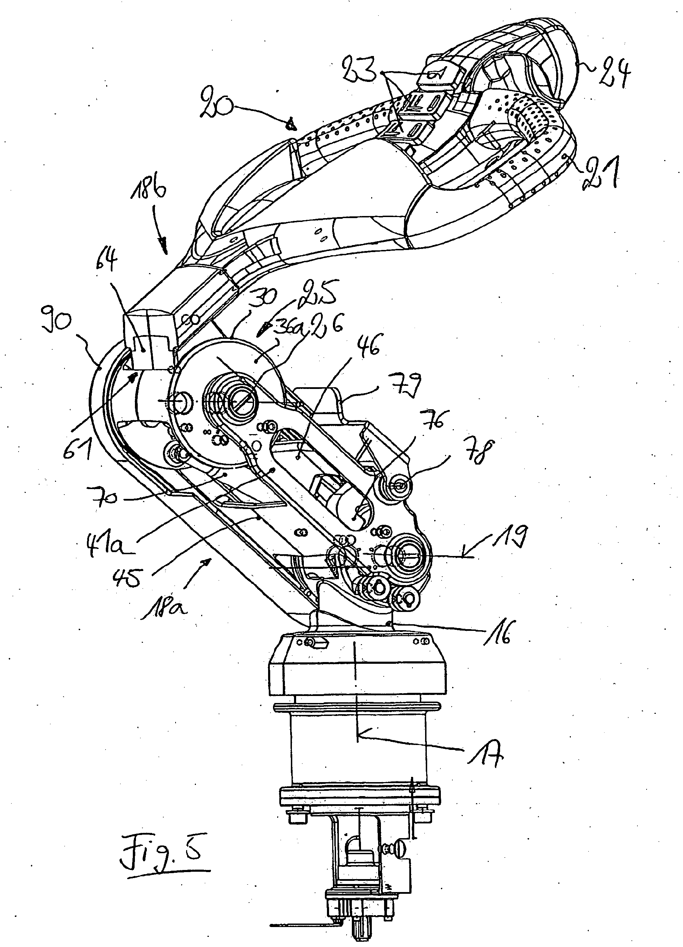

Der deichselfußnahe Teil 18a weist - wie insbesondere in den Figuren 5, 6 und 10 näher ersichtlich ist - weiterhin zwischen dem Lagerbock 30 und dem Deichselfuß 16 angeordnete Querverstrebungen 45, 46 zwischen den seitlichen Flanschplatten 41 a, 41 b auf, die zur Stabilitätserhöhung eine kastenförmige und stabile Struktur des deichselfußnahen Teils 18a ergeben. Die Querverstrebung 45 ist als untere Querverbindung ausgebildet und im dargestellten Ausführungsbeispiel von einem die beiden Flanschplatten 41 a, 41 b verbindenden Verbindungssteg gebildet, der im mittleren Bereich zwischen den Schwenkachsen 19, 26 die beiden Flanschplatten 41a, 41 b verbindet. Entsprechend ist die Querverstrebung 46 als obere Querverbindung ausgebildet und im dargestellten Ausführungsbeispiel von einem die beiden Flanschplatten 41a, 41b verbindenden Verbindungssteg gebildet, der im mittleren Bereich zwischen den Schwenkachsen 19, 26 die beiden Flanschplatten 41a, 41b verbindet.

Der deichselfußnahe Teil 18a ist an dem Deichselfuß 16 zwischen einem Anschlag 50 für die eingeklappte und kurze Stellung der Deichsel 15 sowie einem Anschlag 51 für die ausgeklappte und lange Stellung der Deichsel 15 um die Schwenkachse 19 verschwenkbar angeordnet. Der Aufbau der Anschläge 50, 51 wird anhand der Figuren 4, 6 und 11 näher beschrieben. An dem unteren Bereich der Flanschplatte 41 a sind hierzu Anschlagflächen 52, 53 ausgebildet, die mit entsprechenden Anschlagzapfen 54, 55 zusammenwirken, die an dem Deichselfuß 16 im Bereich der Flanschplatte 16a angeordnet sind.

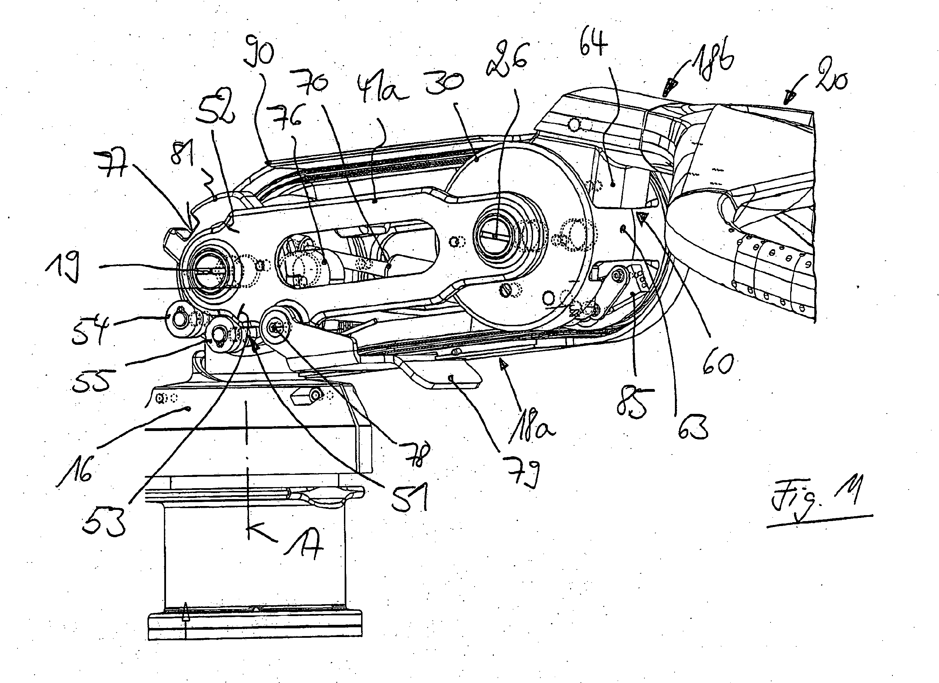

In der eingeklappten Stellung des deichselfußnahen Teils 18a liegt hierbei die Flanschplatte 41 a mit der Anschlagfläche 52 an dem Anschlagzapfen 54 an, wodurch der Anschlag 50 für die eingeklappte und kurze Deichsel 15 gebildet ist, wie in den Figuren 4 und 6 dargestellt ist. In der ausgeklappten Stellung des deichselfußnahen Teils 18a liegt die Flanschplatte 41a mit der Anschlagfläche 53 an dem Anschlagzapfen 55 an, wodurch der Anschlag 51 für die ausgeklappte und lange Stellung der Deichsel 15 gebildet ist, wie in der Figur 11 dargestellt ist.

Der Aufbau des Lagerbocks 30 wird anhand der Figuren 4 bis 6 und 10 bis 14 näher beschrieben. Der Lagerbock 30 ist als Lagergabel ausgebildet, die zwei seitlich beabstandete, scheibenförmige Abschnitte 36a, 36b umfasst, zwischen den ein Freiraum ausgebildet ist, in dem der deichselkopfnahe Teil 18b um die Schwenkachse 26 verschwenkbar angeordnet ist. Der deichselkopfnahe Teil 18b ist hierbei in dem von den flanschförmigen Abschnitten 36a, 36b gebildeten Freiraum zwischen einem Anschlag 60 für die abgesenkte Stellung des Deichselkopfes 20 und einem Anschlag 61 für die angehobene Stellung des Deichselkopfes 20 um die horizontale Schwenkachse 26 verschwenkbar. Der Anschlag 61 für den angehobenen Deichselkopf 20 ist hierbei von einer Querverstrebung 62 des Lagerbocks 30 gebildet, an die der deichselkopfnahe Teil 18b mit einem abgekröpften Lagerabschnitt 64 anschlagen kann, wie beispielsweise in der Figur 6 gezeigt ist. In dem Lagerabschnitt 64 ist hierbei der Lagerbolzen 44 angeordnet. Die Querverstrebung 62 ist von einem die beiden Abschnitte 36a, 36b verbindenden Verbindungssteg gebildet, der mit den beiden Abschnitte 36a, 36b verbunden ist. Entsprechend ist der Anschlag 60 für den abgesenkten Deichselkopf 20 von einer Querverstrebung 63 des Lagerbocks 30 gebildet, an die der deichselkopfnahe Teil 18b mit dem abgekröpften Lagerabschnitt 64 anschlagen kann. Die Querverstrebung 63 ist entsprechend von einem an dem scheibenförmigen Abschnitt 36a, 36b angeformten Verbindungssteg gebildet, wie beispielsweise aus der Figur 11 ersichtlich ist.

Innerhalb des kastenförmigen deichselfußnahen Teils 18a ist eine Gasdruckfeder 70 angeordnet, die eine kraftschlüssige Arretierungseinrichtung 71 zur Arretierung der Deichsel 15 in der kurzen Stellung sowie in der langen Stellung ermöglicht. Die Anlenkung der Gasfeder 70 an dem Deichselfuß 16 sowie dem Lagerbock 30 wird anhand der Figuren 4 und 6 näher erläutert. Die Gasdruckfeder 70 ist mit dem unteren Ende an dem Deichselfuß 16 befestigt, beispielsweise an der Innenseite der Flanschplatte 16b, wie in der Figur 4 dargestellt ist. Die Befestigung der Gasfeder 70 an dem Deichselfuß 16 ist hierbei von der Schwenkachse 19 in vertikaler Richtung nach oben beabstandet. Das obere Ende der Gasdruckfeder 70 ist an dem Lagerbock 30 befestigt, beispielsweise an der Innenseite des scheibenförmigen Abschnitts 36b. Die Befestigung der Gasdruckfeder 70 an dem Lagerbock 30 ist hierbei von der Schwenkachse 26 in vertikaler Richtung nach unten beabstandet. Durch diese Anlenkung der Gasdruckfeder 70 an dem Lagerbock 30 sowie an dem Deichselfuß 16 wird eine Totpunktverriegelung des deichselfußnahen Teils 18a sowohl in der eingeklappten Stellung als auch in der ausgeklappten Stellung der Deichsel 15 erzielt, bei der der deichselfußnahe Teil 18a durch die Kraft der Gasdruckfeder 70 an dem Anschlag 50 bzw. dem Anschlag 51 gehalten wird. Zum Verstellen der Deichsel 15 von der kurzen Stellung in die lange Stellung bzw. von der langen Stellung in die kurze Stellung muss hierbei von der Bedienperson zu Bewegungsbeginn die Kraft der Gasdruckfeder 70 überwunden werden und die Gasdruckfeder 70 komprimiert werden, bis bei senkrecht stehendem deichselfußnahen Teil 18a und somit senkrecht stehender Gasdruckfeder 70 ein Totpunkt durchlaufen wird. Bei der weiteren Schwenkbewegung des deichselfußnahen Teils 18a wird die Gasdruckfeder 70 entspannt und unterstützt die Schwenkbewegung des deichselfußnahen Teils 18a bis zu dem Bewegungsende, wodurch eine günstige Ergonomie für die Verstellung der Deichsel 15 und eine Unterstützung der Bewegung der Deichsel 15 in der zweiten Bewegungshälfte durch die Kraft der Gasdruckfeder 70 erzielt wird.

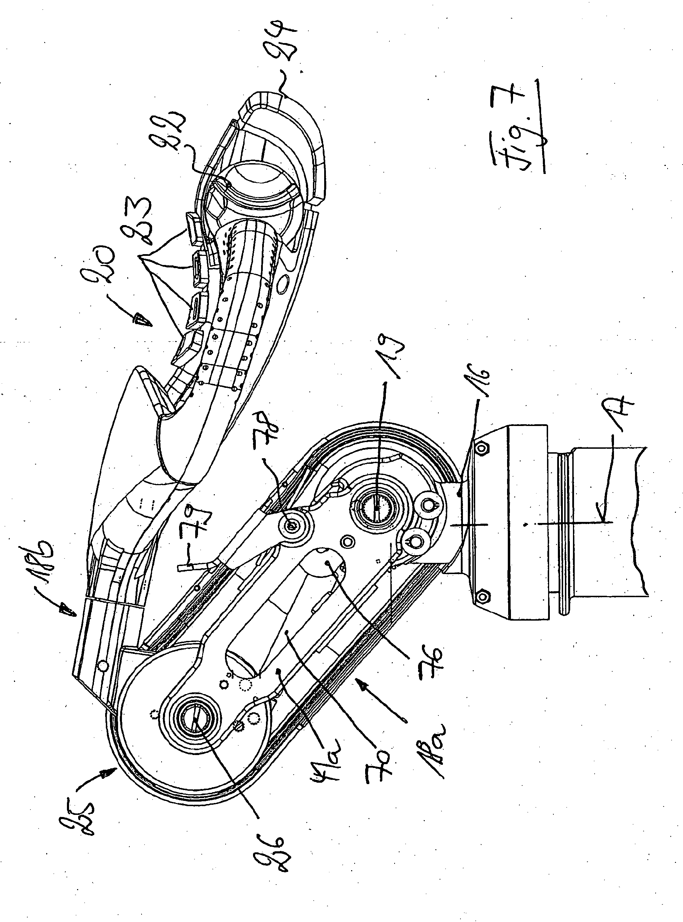

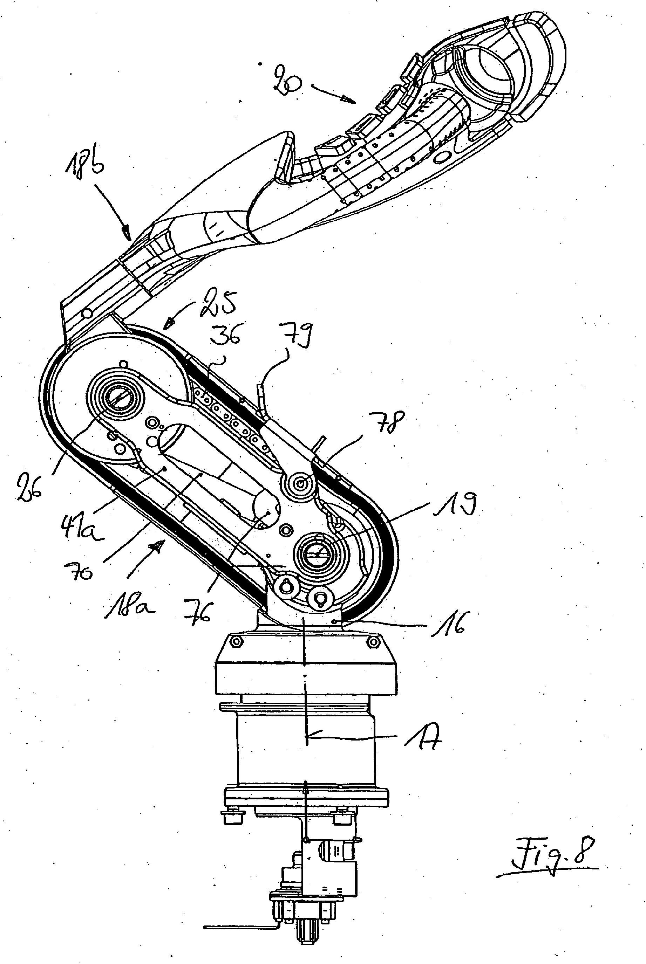

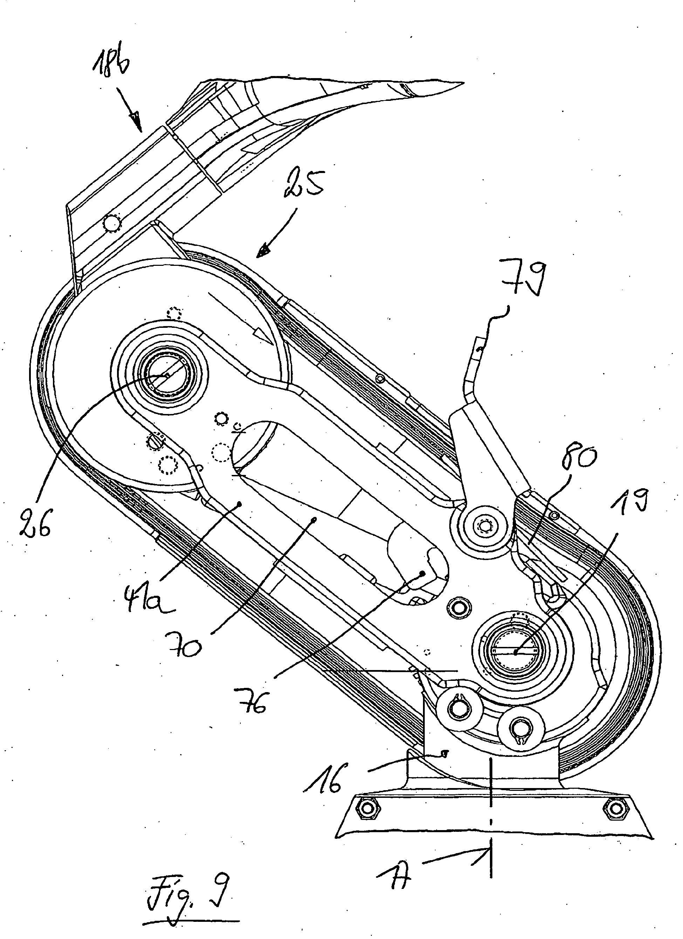

Zur Arretierung der Deichsel 15 in der eingeklappten und somit kurzen Stellung ist zusätzlich eine formschlüssige Arretierungseinrichtung 75 vorgesehen, die anhand der Figuren 4 bis 11 näher beschrieben wird. Die Arretierungsvorrichtung 75 ist von einem an dem deichselfußnahen Teil 18a verschwenkbar angeordneten Rasthaken 76 gebildet, der mit einer Rastausnehmung 77 in dem Deichselfuß 16 zusammenwirkt. Die Rastausnehmung 77 ist hierbei an der Flanschplatte 16a des Deichselfußes 16 ausgebildet. Der Rasthaken 76 ist um eine parallel zu den Schwenkachsen 19 und 26 angeordnete Schwenkachse 78 verschwenkbar angeordnet und mittels eines Handhebels 79 betätigbar, der an den beiden Flanschplatten 41a, 41b um die Schwenkachse 78 verschwenkbar gelagert ist. Der Rasthaken 76 ist mittels einer Feder 80 in eine Verriegelungsstellung beaufschlagt, in der der Rasthaken 76 in die Rastausnehmung 77 einhakt. In den Figuren 7 und 8 ist die Verriegelungsstellung für die kurze Stellung der Deichsel 15 dargestellt. Durch Betätigen des Handhebels 79 und somit Verschwenken des Handhebels 79 um die Schwenkachse 78 kann der Rasthaken 76 - wie in der Figur 9 dargestellt ist - betätigt und außer Eingriff mit der Rastausnehmung 77 gebracht werden, um ein Verstellen der Deichsel 15 von der kurzen Stellung in die lange Stellung zu erzielen. An der Flanschplatte 16a des Deichselfußes 16 ist angrenzend an die Rastausnehmung 77 eine Führungskulisse 81 für den Rasthaken 76 angeformt, die ermöglicht, dass beim Verstellen der Deichsel 15 von der langen Stellung in die kurze Stellung der Rasthaken 76 entgegen der Kraft der Feder 80 verschwenkt wird, um beim Erreichen der eingeklappten Stellung des deichselfußnahen Teils 18a automatisch in die Rastausnehmung 77 einrasten zu können.

Mit dem federbelasteten Rasthaken 76 wird eine hohe Betriebssicherheit bei kurzer Deichsel, insbesondere im Mitfahrerbetrieb gemäß den Figuren 16a und 16b, ermöglicht, da sich die auf der ausgeklappten Fahrerstandplattform 8 stehende Bedienperson an der arretierten Deichsel 15 festhalten kann. Zum Verstellen der Deichsel 15 von der kurzen in die lange Stellung ist lediglich ein Handgriff zum Betätigen des Handhebels 79 und zum Lösen des Rasthakens 76 erforderlich, wodurch eine hohe Bedienungsfreundlichkeit und eine schneller Wechsel der Deichsel 15 von der kurzen in die lange Stellung erzielt wird. Beim Verstellen von der langen in die kurze Stellung der Deichsel 15 ist aufgrund der Führungskulisse 81, an der der Rasthaken 76 beim Verschwenken des deichselfußnahen Teils 18a geführt wird, ein selbstständiges und automatisches Einrasten des Rasthakens 76 bei Erreichen der kurzen Stellung erzielbar, wodurch kein zusätzlicher Bedienungsaufwand für die Arretierungseinrichtung 75 beim Verstellen der Deichsel 15 von der langen in die kurze Stellung erforderlich ist, wodurch ein schneller Wechsel mit einer Bedienungsfreundlichkeit erzielt wird.

In der Figur 6 ist eine Sensoreinrichtung 85 dargestellt, mit der die Stellung des deichselkopfnahen Teils 18b bei angehobener, senkrechter Stellung des Deichselkopfes 20 und/oder abgesenkter, waagerechter Stellung des Deichselkopfes 20 erfasst werden kann. Die Sensoreinrichtung 85 ist hierzu an dem Lagerbock 30, beispielsweise im Bereich des scheibenförmigen Abschnitts 36b, angeordnet und von einem Tastschalter gebildet, der von einer an dem deichselkopfnahen Teil 18b an dem Lagerabschnitt 64 angeordneten, nockenförmigen Betätigungsbahn 86 betätigbar ist. Die Sensoreinrichtung 85 steht hierbei ebenfalls mit der elektronischen Steuereinrichtung des Flurförderzeugs in Wirkverbindung. Hierdurch kann anhand der angehobenen, senkrechten bzw. abgesenkten, waagerechten Stellung des Deichselkopfes 20 eine Begrenzung bzw. Reduzierung der Fahrgeschwindigkeit bzw. der Beschleunigung in einem Bremsbereich bei waagerechter und/oder senkrechter Deichselkopfstellung durchgeführt werden und/oder eine Aktivierung einer Feststellbremseinrichtung in den genannten Bremsbereichen des Deichselkopfes 20 erfolgen.

In der Figur 6 ist eine weitere Sensoreinrichtung 87 dargestellt, die mit der elektronischen Steuereinrichtung in Wirkverbindung steht und mit der die Stellung des deichselfußnahen Teils 18a in der Stellung für die kurze Deichsel 15 und/oder in der Stellung für die lange Deichsel 15 erfasst werden kann. Die Sensoreinrichtung kann hierbei an dem Deichselfuß 16, insbesondere der Flanschplatte 16a, angeordnet sein und von einem Tastschalter gebildet werden, der von einer an dem deichselfußnahen Teil 18a angeordneten, nicht näher dargestellten nockenförmigen Betätigungsbahn betätigbar ist.

In den Figuren 4 bis 14 ist weiterhin eine Schutzabdeckung 90 für die Parallelführungseinrichtung 31 dargestellt, die an dem deichselfußnahen Teil 18a angeordnet ist, um den von den Kettenrädern 32, 34 und der Kette 36 gebildeten Zugmitteltrieb abzudecken.

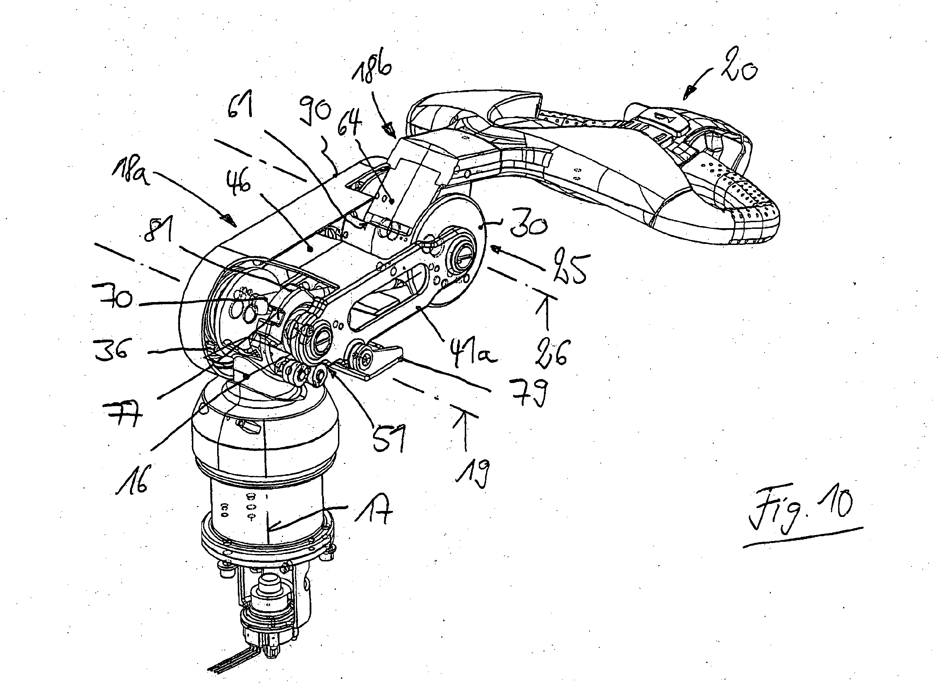

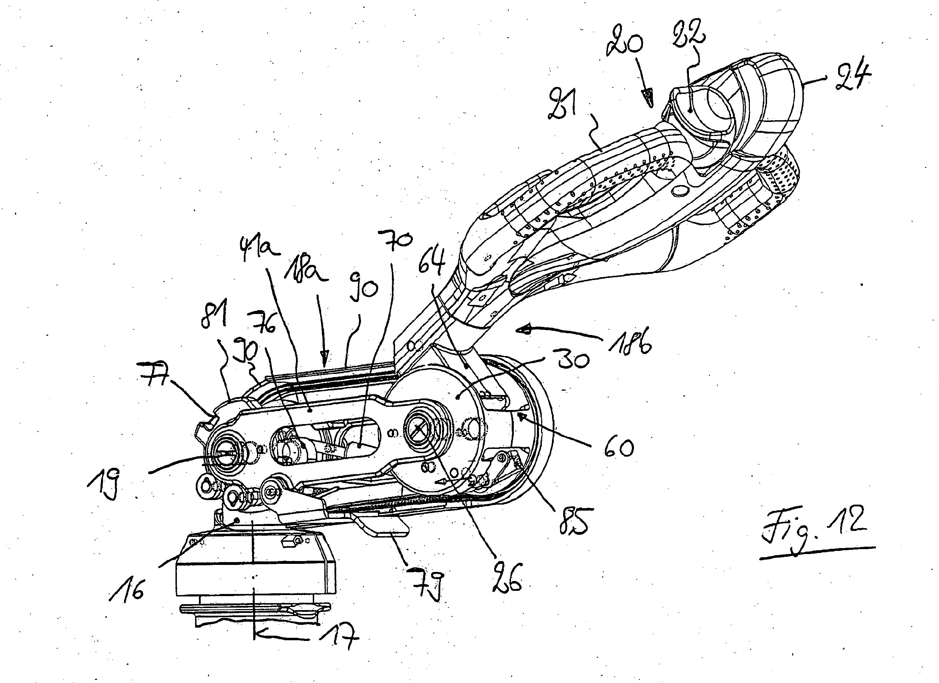

Die Deichsel 15 ermöglicht einen schnellen und bedienungsfreundlichen Wechsel der als Kombi-Deichsel ausgebildeten Deichsel 15 zwischen der langen, gestreckten Stellung und der kurzen, angewinkelten Stellung, wobei insbesondere durch die kurze Bewegungsbahn mit unveränderter Orientierung und ohne Verschwenken des Deichselkopfes 20 eine ergonomische Längenveränderung der Deichsel 15 beim Verschwenken des deichselfußnahen Teils 18a ohne Veränderung der Handposition an den Griffabschnitten 21 des Deichselkopfes 20 ermöglicht wird. Insbesondere aus den Figuren 2 und 3 wird deutlich, dass zur Längenveränderung der Deichsel 15 durch Verschwenken des deichselfußnahen Teils 18a um die Schwenkachse 19 die Deichsel 15 von der kurzen Stellung in die lange Stellung bzw. von der langen Stellung in die kurze Stellung betätigt werden kann, wobei die Orientierung und Ausrichtung des Deichselkopfes 20 gleich bleibt und keine zusätzliche Schwenkbewegung des Deichselkopfes 20 um die Schwenkachse 26 auftritt. Die Figuren 4 bis 9 verdeutlichen weiterhin, dass in der kurze Stellung der Deichsel 15 bei angewinkeltem deichselfußnahen Teil 18a der Deichselkopf 20 in dem Lagerbock 30 um die Schwenkachse 26 zwischen dem Anschlag 60 für die waagerechte Position des Deichselkopfes 20 (Figur 4) und dem Anschlag 61 für die senkrechte Position des Deichselkopfes 20 (Figur 5) betätigt werden kann. Das gleiche Schwenkverhalten des Deichselkopfes 20 ist in der langen Stellung der Deichsel 15 bei ausgestrecktem deichselfußnahen Teil 18a erzielbar. Wie in den Figuren 10 bis 14 verdeutlicht ist, kann ebenfalls in der langen Stellung der Deichsel 15 bei ausgestrecktem deichselfußnahen Teil 18a der Deichselkopf 20 in dem Lagerbock 30 um die Schwenkachse 26 zwischen dem Anschlag 60 für die waagerechte Position des Deichselkopfes 20 (Figuren 10, 11) und dem Anschlag 61 für die senkrechte Position des Deichselkopfes 20 (Figuren 12 bis 14) betätigt werden.

Die Bedienperson kann hierdurch die Deichsel 15 auf einfache, schnelle und ergonomische Weise zwischen der langen Stellung und der kurzen Stellung verstellen, wobei insbesondere im Mitgängerbetrieb des Flurförderzeugs 1 eine hohe Wendigkeit und in Verbindung mit den angepassten maximalen Fahrgeschwindigkeiten bei langer und kurzer Deichsel 15 eine hohe Umschlagleistung des Flurförderzeugs mit einer schnellen, sicheren und kontrollierten Lasthandhabung erzielt werden kann, da die Deichsel 15 in engen Bereichen auf einfache und schnelle Weise in die kurze Stellung abgewinkelt werden kann und im normalen Betrieb in einfacher und schneller Weise in die lange Stellung ausgestreckt werden kann.

Bevorzugt sind der Abstand der Schwenkachsen 19, 26 an dem deichselfußnahen Teil 18a und die Anschläge 50, 51 des deichselfußnahen Teils 18a derart bemessen und angeordnet, dass sich im Mitgängerbetrieb und Mitfahrerbetrieb eine ergonomisch günstige Position der Bedienperson zum Flurförderzeug ergibt. Bevorzugt entspricht hierbei die vertikale Höhenveränderung der Schwenkachse 26 des Deichselkopfes 20 zwischen der kurzen Stellung und der langen Stellung der Deichsel 15 der Höhe der ausgeklappten Fahrerstandplattform 8 über der Fahrbahnoberfläche.

## Patentansprüche

1. Deichselgeführtes Flurförderzeug (1), insbesondere Hubwagen, zum wahlweisen Betrieb im Mitgängerbetrieb und im Mitfahrerbetrieb, mit einem Fahrantrieb, insbesondere einem elektrischen Fahrantrieb, einer zwischen einer Stellung mit kurzer Deichsel und einer Stellung mit langer Deichsel längenverstellbaren Deichsel (15) und einem Fahrerplatzmodul (6), das eine klappbare Fahrerstandplattform (8) und klappbare Seitenbügel (9) umfasst, **dadurch gekennzeichnet, dass** im Mitgängerbetrieb bei hochgeschwenkter Fahrerstandplattform (8) und eingeklappten Seitenbügeln (9) die maximale Fahrgeschwindigkeit des Fahrantriebs des Flurförderzeugs (1) in Abhängigkeit von der Stellung der Deichsel (15) bei kurzer Deichsel oder bei langer Deichsel auf unterschiedliche Höchstwerte begrenzt ist und im Mitfahrerbetrieb bei ausgeklappter Fahrerstandplattform (8) und in der kurzen Stellung befindlichen Deichsel (15) die maximale Fahrgeschwindigkeit des Fahrantriebs des Flurförderzeugs (1) in Abhängigkeit von der eingeklappten Stellung oder der ausgeklappten Stellung der Seitenbügel (9) auf unterschiedliche Höchstwerte begrenzt ist.

2. Deichselgeführtes Flurförderzeug nach Anspruch 1, **dadurch gekennzeichnet, dass** im Mitgängerbetrieb die maximale Fahrgeschwindigkeit des Fahrantriebs bei kurzer Deichsel (15) auf einen Höchstwert im Bereich von 4 km/h begrenzt ist.

3. Deichselgeführtes Flurförderzeug nach Anspruch 1 oder 2, **dadurch gekennzeichnet, dass** im Mitgängerbetrieb die maximale Fahrgeschwindigkeit des Fahrantriebs bei langer Deichsel (15) auf einen Höchstwert im Bereich von 6 km/h begrenzt ist.

4. Deichselgeführtes Flurförderzeug nach einem der Ansprüche 1 bis 3, **dadurch gekennzeichnet, dass** im Mitfahrerbetrieb die maximale Fahrgeschwindigkeit des Fahrantriebs bei ausgeklappter Fahrerstandplattform (8) und eingeklappten Seitenbügeln (9) auf einen Höchstwert im Bereich von 6 km/h begrenzt ist.

5. Deichselgeführtes Flurförderzeug nach einem der Ansprüche 1 bis 4, **dadurch gekennzeichnet, dass** im Mitfahrerbetrieb die maximale Fahrgeschwindigkeit des Fahrantriebs bei ausgeklappter Fahrerstandplattform (8) und ausgeklappten Seitenbügeln (9) auf einen Höchstwert im Bereich von 8 bis 12 km/h begrenzt ist.

6. Deichselgeführtes Flurförderzeug nach einem der Ansprüche 1 bis 5, **dadurch gekennzeichnet, dass** eine elektronische Steuereinrichtung vorgesehen ist, die den Fahrantrieb in Abhängigkeit von der Betätigung eines an der Deichsel (15) angeordneten Fahrschalters (22) ansteuert, wobei zur Erfassung der Stellung mit kurzer Deichsel (15) und der Stellung mit langer Deichsel (15) eine mit der elektronischen Steuereinrichtung in Verbindung stehende Sensoreinrichtung (87) vorgesehen ist.

7. Deichselgeführtes Flurförderzeug nach einem der Ansprüche 1 bis 6, **dadurch gekennzeichnet, dass** zur Erfassung der eingeklappten Stellung der Fahrerstandplattform (8) und der ausgeklappten Stellung der Fahrerstandplattform (8) eine mit der elektronischen Steuereinrichtung in Verbindung stehende Sensoreinrichtung vorgesehen ist.

8. Deichselgeführtes Flurförderzeug nach einem der Ansprüche 1 bis 7, **dadurch gekennzeichnet, dass** zur Erfassung der eingeklappten Stellung der Seitenbügel (9) und der ausgeklappten Stellung der Seitenbügel (9) eine mit der elektronischen Steuereinrichtung in Verbindung stehende Sensoreinrichtung vorgesehen ist.

9. Deichselgeführtes Flurförderzeug nach einem der Ansprüche 1 bis 8, **dadurch gekennzeichnet, dass** die Deichsel (15) einen Deichselfuß (16), einen Deichselschaft (18) und einen Deichselkopf (20) umfasst, wobei die Deichsel (15) mittels des Deichselfußes (16) an einem Antriebsteil (2) des Flurförderzeugs (1) um eine im Wesentlichen vertikale Schwenkachse (17) schwenkbar gelagert ist, und die Deichsel (15) zur Längenverstellung als klappbare Deichsel ausgebildet ist, wobei der Deichselschaft (18) einen zweiteiligen Aufbau mit einem deichselfußnahen Teil (18a) und einemdeichselkopfnahen Teil (18b) aufweist, wobei der deichselfußnahe Teil (18a) an dem Deichselfuß (16) um eine im Wesentlichen horizontale Schwenkachse (19) verschwenkbar gelagert ist und der deichselkopfnahe Teil (18b) über ein Schwenkgelenk (25) mit einer im Wesentlichen horizontalen Schwenkachse (26) an dem deichselfußnahen Bereich (18a) verschwenkbar gelagert ist, wobei in der Stellung mit kurzer Deichsel der deichselfußnahe Teil (18a) gegenüber dem deichselkopfnahen Teil (18b) angewinkelt ist und in der langen Stellung der deichselkopfnahe Teil (18b) in Verlängerung des deichselfußnahen Teils (18a) angeordnet ist.

10. Deichselgeführtes Flurförderzeug nach Anspruch 9, **dadurch gekennzeichnet, dass** der an dem deichselkopfnahen Teil (18b) angeordnete Deichselkopf (20) in der Stellung mit kurzer Deichsel (15) und in der Stellung mit langer Deichsel (15) um das Schwenkgelenk (25) zwischen dem deichselkopfnahen Teil (18b) und dem deichselfußnahen Teil (18a) zwischen einer waagerechten Position und einer senkrechten Position verschwenkbar ist.

11. Deichselgeführtes Flurförderzeug nach Anspruch 9 oder 10, **dadurch gekennzeichnet, dass** zwischen dem Deichselfuß (16) und dem deichselfußnahen Teil (18a) des Deichselschaftes (18) jeweils ein Anschlag (50; 51) für die kurze Stellung und die lange Stellung der Deichsel (15) ausgebildet ist.

12. Deichselgeführtes Flurförderzeug nach Anspruch 9 oder 10, **dadurch gekennzeichnet, dass** eine Parallelführungseinrichtung (31) für den Deichselkopf (20) vorgesehen ist, die bei der Betätigung de Deichsel (15) zwischen der langen Stellung und der kurzen Stellung eine Parallelführung des Deichselkopfes (20) ermöglicht.

13. Deichselgeführtes Flurförderzeug nach Anspruch 12, **dadurch gekennzeichnet, dass** das Schwenkgelenk (25) zwischen dem deichselfußnahen Teil (18a) und dem deichselkopfnahen Teil (18b) von einem Lagerbock (30) gebildet ist, der über die Parallelführungseinrichtung (31) mit dem Deichselfuß (16) gekoppelt ist, und der deichselkopfnahe Teil (18b) an dem Lagerbock (30) um die horizontale Schwenkachse (26) zwischen der waagerechten Position und der senkrechten Position verschwenkbar gelagert ist.

14. Deichselgeführtes Flurförderzeug nach Anspruch 12 oder 13, **dadurch gekennzeichnet, dass** die Parallelführungseinrichtung (31) von einem Zugmitteltrieb, insbesondere einem als Kettentrieb ausgebildeten formschlüssigen Zugmitteltrieb, gebildet ist.

15. Deichselgeführtes Flurförderzeug nach einem der Ansprüche 1 bis 14, **dadurch gekennzeichnet, dass** eine formschlüssige Arretierungsvorrichtung (75) zur Arretierung der Deichsel (15) in der kurzen Stellung vorgesehen ist.

16. Deichselgeführtes Flurförderzeug nach Anspruch 15, **dadurch gekennzeichnet, dass** die formschlüssige Arretierungsvorrichtung (75) einen an dem deichselfußnahen Teil (18a) angeordneten Rasthaken (76) umfasst, der mit einer Rastausnehmung (77) in dem Deichselfuß (16) zusammenwirkt.

17. Deichselgeführtes Flurförderzeug nach Anspruch 16, **dadurch gekennzeichnet, dass** der Rasthaken (76) federbeaufschlagt ist und mittels eines an dem deichselfußnahen Teil angeordneten Handhebels (79) betätigbar ist.

18. Deichselgeführtes Flurförderzeug nach Anspruch 13, **dadurch gekennzeichnet, dass** im Bereich des Lagerbocks (30) eine Sensoreinrichtung (85), insbesondere ein Tastschalter, zur Erfassung der angehobenen Stellung und/oder der abgesenkten Stellung des Deichselkopfes (20) angeordnet ist.

19. Deichselgeführtes Flurförderzeug nach Anspruch 9, **dadurch gekennzeichnet, dass** die Sensoreinrichtung (87) zur Erfassung der Stellung mit kurzer Deichsel und der Stellung mit langer Deichsel von einer im Bereich des Deichselfußes (16) angeordneten Sensoreinrichtung (87), insbesondere einem Tastschalter, gebildet ist, die mittels des deichselfußnahen Teils (18a) betätigt ist.

## Claims

1. Tiller-guided industrial truck (1), in particular lift truck, for optional operation in the pedestrian mode and stand-on mode, with a travel drive, in particular an electric travel drive, a tiller (15) which is adjustable in length between a position with a short tiller and a position with a long tiller, and a driver's ride-on position module (6) which comprises a foldable driver stand-on platform (8) and foldable side bars (9), **characterized in that**, in the pedestrian mode, with the driver stand-on platform (8) pivoted upward and the side bars (9) folded in, the maximum driving speed of the travel drive of the industrial truck (1) is limited to different maximum values depending on the position of the tiller (15) when the tiller is short or when the tiller is long, and, in the stand-on mode, with the driver stand-on platform (8) unfolded and the tiller (15) in the short position, the maximum driving speed of the travel drive of the industrial truck (1) is limited to different maximum values depending on the folded-in position or the unfolded position of the side bars (9).

2. Tiller-guided industrial truck according to Claim 1, **characterized in that**, in the pedestrian mode, the maximum driving speed of the travel drive when the tiller (15) is short is limited to a maximum value in the region of 4 km/h.

3. Tiller-guided industrial truck according to Claim 1 or 2, **characterized in that**, in the pedestrian mode, the maximum driving speed of the travel drive when the tiller (15) is long is limited to a maximum value in the region of 6 km/h.

4. Tiller-guided industrial truck according to one of Claims 1 to 3, **characterized in that**, in the stand-on mode, the maximum driving speed of the travel drive when the driver stand-on platform (8) is unfolded and the side bars (9) are folded in is limited to a maximum value in the region of 6 km/h.

5. Tiller-guided industrial truck according to one of Claims 1 to 4, **characterized in that**, in the stand-on mode, the maximum driving speed of the travel drive when the driver stand-on platform (8) is unfolded and the side bars (9) are unfolded is limited to a maximum value in the region of 8 to 12 km/h.

6. Tiller-guided industrial truck according to one of Claims 1 to 5, **characterized in that** an electronic control device is provided, which activates the travel drive depending on the actuation of a driving switch (22) arranged on the tiller (15), wherein a sensor device (87) which is connected to the electronic control device is provided for sensing the position with the short tiller (15) and the position with the long tiller (15).

7. Tiller-guided industrial truck according to one of Claims 1 to 6, **characterized in that** a sensor device which is connected to the electronic control device is provided for sensing the folded-in position of the driver stand-on platform (8) and the unfolded position of the driver stand-on platform (8).

8. Tiller-guided industrial truck according to one of Claims 1 to 7, **characterized in that** a sensor device which is connected to the electronic control device is provided for sensing the folded-in position of the side bars (9) and the unfolded position of the side bars (9).

9. Tiller-guided industrial truck according to one of Claims 1 to 8, **characterized in that** the tiller (15) comprises a tiller foot (16), a tiller shaft (18) and a tiller head (20), wherein the tiller (15) is mounted on a driving part (2) of the industrial truck (1) by means of the tiller foot (16) so as to be pivotable about a substantially vertical pivot axis (17), and the tiller (15) is designed as a foldable tiller for the length adjustment, wherein the tiller shaft (18) has a two-part construction with a part (18a) in the vicinity of the tiller foot and a part (18b) in the vicinity of the tiller head, wherein the part (18a) in the vicinity of the tiller foot is mounted on the tiller foot (16) so as to be pivotable about a substantially horizontal pivot axis (19), and the part (18b) in the vicinity of the tiller head is mounted pivotably on the region (18a) in the vicinity of the tiller foot via a pivot joint (25) having a substantially horizontal pivot axis (26), wherein, in the position with a short tiller, the part (18a) in the vicinity of the tiller foot is angled in relation to the part (18b) in the vicinity of the tiller head and, in the long position, the part (18b) in the vicinity of the tiller head is arranged as an extension of the part (18a) in the vicinity of the tiller foot.

10. Tiller-guided industrial truck according to Claim 9, **characterized in that** the tiller head (20), which is arranged on the part (18b) in the vicinity of the tiller head, is pivotable in the position of a short tiller (15) and in the position of a long tiller (15) between a horizontal position and a vertical position about the pivot joint (25) between the part (18b) in the vicinity of the tiller head and the part (18a) in the vicinity of the tiller foot.

11. Tiller-guided industrial truck according to Claim 9 or 10, **characterized in that** a respective stop (50; 51) for the short position and the long position of the tiller (15) is formed between the tiller foot (16) and that part (18a) of the tiller shaft (18) which is in the vicinity of the tiller foot.

12. Tiller-guided industrial truck according to Claim 9 or 10, **characterized in that** a parallel-guide device (31) for the tiller head (20) is provided, said parallel-guide device permitting parallel guidance of the tiller head (20) between the long position and the short position when the tiller (15) is actuated.

13. Tiller-guided industrial truck according to Claim 12, **characterized in that** the pivot joint (25) between the part (18a) in the vicinity of the tiller foot and the part (18b) in the vicinity of the tiller head is formed by a bearing block (30) which is coupled to the tiller foot (16) via the parallel-guide device (31), and the part (18b) in the vicinity of the tiller head is mounted on the bearing block (30) so as to be pivotable between the horizontal position and the vertical position about the horizontal pivot axis (26).

14. Tiller-guided industrial truck according to Claim 12 or 13, **characterized in that** the parallel-guide device (31) is formed by a traction mechanism drive, in particular a form-fitting traction mechanism guide in the form of a chain drive.

15. Tiller-guided industrial truck according to one of Claims 1 to 14, **characterized in that** a form-fitting locking device (75) is provided for locking the tiller (15) in the short position.

16. Tiller-guided industrial truck according to Claim 15, **characterized in that** the form-fitting locking device (75) comprises a latching hook (76) which is arranged on the part (18a) in the vicinity of the tiller foot and interacts with a latching recess (77) in the tiller foot (16).

17. Tiller-guided industrial truck according to Claim 16, **characterized in that** the latching hook (76) is spring-loaded and is actuatable by means of a hand lever (79) arranged on the part in the vicinity of the tiller foot.

18. Tiller-guided industrial truck according to Claim 13, **characterized in that** a sensor device (85), in particular a touch contact switch, for sensing the raised position and/or the lowered position of the tiller head (20) is arranged in the region of the bearing block (30).

19. Tiller-guided industrial truck according to Claim 9, **characterized in that** the sensor device (87) for sensing the position of a short tiller and a position of a long tiller is formed by a sensor device (87) arranged in the region of the tiller foot (16), in particular a touch contact switch, which sensor device is actuated by means of the part (18a) in the vicinity of the tiller foot.

## Revendications

1. Chariot de manutention guidé par timon (1), en particulier chariot élévateur, pour le fonctionnement sélectif, à conducteur accompagnant et en mode à conducteur porté, comprenant un entraînement de conduite, en particulier un entraînement de conduite électrique, un timon (15) réglable en longueur entre une position à timon court une position à timon long et un module de poste de conduite (6), qui comprend une plate-forme de station debout rabattable (8) et des arceaux latéraux rabattables (9), **caractérisé en ce qu'**en mode à conducteur accompagnant, lorsque la plate-forme de station debout (8) est pivotée vers le haut et que les arceaux latéraux (9) sont rabattus vers l'intérieur, la vitesse de conduite maximale de l'entraînement de conduite du chariot de manutention (1) est limitée à des valeurs maximales différentes en fonction de la position du timon (15) en cas de timon court ou en cas de timon long et en mode à conducteur porté, lorsque la plate-forme de station debout (8) est rabattue dans la position ouverte et que le timon (15) se trouve dans la position courte, la vitesse de conduite maximale de l'entraînement de conduite du chariot de manutention (1) est limitée à des valeurs maximales différentes en fonction de la position rabattue vers l'intérieur ou de la position rabattue dans la position ouverte des étriers latéraux (9).

2. Chariot de manutention guidé par timon selon la revendication 1, **caractérisé en ce qu'**en mode à conducteur accompagnant, la vitesse de conduite maximale de l'entraînement de conduite, pour un timon court (15), est limitée à une valeur maximale de l'ordre de 4 km/h.

3. Chariot de manutention guidé par timon selon la revendication 1 ou 2, **caractérisé en ce qu'**en mode à conducteur accompagnant, la vitesse de conduite maximale de l'entraînement de conduite, pour un timon long (15), est limitée à une valeur maximale de l'ordre de 6 km/h.

4. Chariot de manutention guidé par timon selon l'une quelconque des revendications 1 à 3, **caractérisé en ce qu'**en mode à conducteur porté, la vitesse de conduite maximale de l'entraînement de conduite, lorsque la plate-forme de station debout (8) est rabattue dans la position ouverte et que les arceaux latéraux (9) sont rabattus vers l'intérieur, est limitée à une valeur maximale de l'ordre de 6 km/h.

5. Chariot de manutention guidé par timon selon l'une quelconque des revendications 1 à 4, **caractérisé en ce qu'**en mode à conducteur porté, la vitesse de conduite maximale de l'entraînement de conduite, lorsque la plate-forme de station debout (8) est rabattue dans la position ouverte et que les arceaux latéraux (9) sont rabattus dans la position ouverte, est limitée à une valeur maximale de l'ordre de 8 à 12 km/h.

6. Chariot de manutention guidé par timon selon l'une quelconque des revendications 1 à 5, **caractérisé en ce qu'**un dispositif de commande électronique est prévu, lequel commande l'entraînement de conduite en fonction de l'actionnement d'un commutateur de conduite (22) disposé au niveau du timon (15), un dispositif de capteur (87) en liaison avec le dispositif de commande électronique étant prévu pour détecter la position à timon court (15) et la position à timon long (15).

7. Chariot de manutention guidé par timon selon l'une quelconque des revendications 1 à 6, **caractérisé en ce que** pour détecter la position de la plate-forme de station debout (8) rabattue vers l'intérieur et la position de la plate-forme de station debout (8) rabattue dans la position ouverte, il est prévu un dispositif de capteur en liaison avec le dispositif de commande électronique.

8. Chariot de manutention guidé par timon selon l'une quelconque des revendications 1 à 7, **caractérisé en ce que** pour détecter la position des arceaux latéraux (9) rabattue vers l'intérieur et la position des arceaux latéraux (9) rabattue dans la position ouverte, il est prévu un dispositif de capteur en liaison avec le dispositif de commande électronique.

9. Chariot de manutention guidé par timon selon l'une quelconque des revendications 1 à 8, **caractérisé en ce que** le timon (15) comprend une base de timon (16), une tige de timon (18) et une tête de timon (20), le timon (15) étant supporté de manière pivotante autour d'un axe de pivotement essentiellement vertical (17) au moyen de la base de timon (16) au niveau d'une partie d'entraînement (2) du chariot de manutention (1), et le timon (15) étant réalisé pour un réglage en longueur en tant que timon rabattable, la tige de timon (18) présentant une construction en deux parties avec une partie proche de la base de timon (18a) et une partie proche de la tête de timon (18b), la partie proche de la base de timon (18a) étant supportée de manière pivotante autour d'un axe de pivotement essentiellement horizontal (19) au niveau de la base de timon (16) et la partie proche de la tête de timon (18b) étant supportée de manière pivotante par le biais d'une articulation pivotante (25) avec un axe de pivotement essentiellement horizontal (26) au niveau de la région proche de la base de timon (18a), et dans la position à timon court, la partie proche de la base de timon (18a) étant coudée par rapport à la partie proche de la tête de timon (18b) et, dans la position longue, la partie proche de la tête de timon (18b) étant disposée dans le prolongement de la partie proche de la base de timon (18a).

10. Chariot de manutention guidé par timon selon la revendication 9, **caractérisé en ce que** la tête de timon (20) disposée au niveau de la partie proche de la tête de timon (18b), dans la position à timon court (15) et dans la position à timon long (15), peut pivoter autour de l'articulation pivotante (25) entre la partie proche de la tête de timon (18b) et la partie proche de la base de timon (18a) entre une position horizontale et une position verticale.

11. Chariot de manutention guidé par timon selon la revendication 9 ou 10, **caractérisé en ce qu'**entre la base de timon (16) et la partie proche de la base de timon (18a) de la tige de timon (18) est réalisée à chaque fois une butée (50 ; 51) pour la position courte et la position longue du timon (15).

12. Chariot de manutention guidé par timon selon la revendication 9 ou 10, **caractérisé en ce qu'**un dispositif à guidage parallèle (31) pour la tête de timon (20) est prévu, lequel, lors de l'actionnement du timon (15) entre la position longue et la position courte, permet un guidage parallèle de la tête de timon (20).

13. Chariot de manutention guidé par timon selon la revendication 12, **caractérisé en ce que** l'articulation pivotante (25) est formée entre la partie proche de la base de timon (18a) et la partie proche de la tête de timon (18b) par un coussinet (30), qui est accouplé par le biais du dispositif à guidage parallèle (31) à la base de timon (16), et la partie proche de la tête de timon (18b) est supportée de manière pivotante autour de l'axe de pivotement horizontal (26) entre la position horizontale et la position verticale au niveau du coussinet (30).

14. Chariot de manutention guidé par timon selon la revendication 12 ou 13, **caractérisé en ce que** le dispositif à guidage parallèle (31) est formé par un entraînement à moyen de traction, en particulier un entraînement à moyen de traction à engagement positif réalisé sous forme d'entraînement à chaîne.

15. Chariot de manutention guidé par timon selon l'une quelconque des revendications 1 à 14, **caractérisé en ce qu'**un dispositif de blocage à engagement positif (75) est prévu pour bloquer le timon (15) dans la position courte.

16. Chariot de manutention guidé par timon selon la revendication 15, **caractérisé en ce que** le dispositif de blocage à engagement positif (75) comprend un crochet d'encliquetage (76) disposé au niveau de la partie proche de la base de timon (18a), lequel coopère avec un évidement d'encliquetage (77) dans la base de timon (16).

17. Chariot de manutention guidé par timon selon la revendication 16, **caractérisé en ce que** le crochet d'encliquetage (76) est sollicité par ressort et peut être actionné au moyen d'un levier manuel (79) disposé au niveau de la partie proche de la base de timon.

18. Chariot de manutention guidé par timon selon la revendication 13, **caractérisé en ce que** dans la région du coussinet (30) est disposé un dispositif de capteur (85), en particulier un commutateur à touche, pour détecter la position relevée et/ou la position abaissée de la tête de timon (20).

19. Chariot de manutention guidé par timon selon la revendication 9, **caractérisé en ce que** le dispositif de capteur (87) pour détecter la position à timon court et la position à timon long est formé par un dispositif de capteur (87) disposé dans la région de la base de timon (16), en particulier un commutateur à touche, qui est actionné au moyen de la partie proche de la base de timon (18a).
